# EUROPÄISCHE PATENTSCHRIFT

(11) **EP 2 052 014 B1**
(45) Veröffentlichungstag und Bekanntmachung des Hinweises auf die Patenterteilung: **06.10.2010**
(21) Anmeldenummer: 07787893.2
(22) Anmeldetag: 25.07.2007
(51) Int. Cl.: C08J 9/00, C08K 5/00, C08L 83/12

(54) **VERWENDUNG NIEDRIGVISKOSER WÄSSRIGER POLYURETHANHEISSWEICHSCHAUMSTABILISATORLÖSUNGEN ENTHALTEND POLYETHERSILOXANE BEI DER HERSTELLUNG VON POLYURETHANHEISSWEICHSCHÄUMEN**
USE OF AQUEOUS POLYURETHANE HOT SOFT FOAM STABILIZING SOLUTIONS OF LOW VISCOSITY HAVING POLYETHER SILOXANE IN THE PRODUCTION OF POLYURETHANE HOT SOFT FOAMS
UTILISATION DE SOLUTIONS AQUEUSES À FAIBLE VISCOSITÉ STABILISANT LES MOUSSES MOLLES CHAUDES DE POLYURÉTHANE ET CONTENANT DES POLYÉTHERSILOXANES POUR LA FABRICATION DE MOUSSES MOLLES CHAUDES DE POLYURÉTHANE

(30) Priorität: 18.08.2006 DE 102006038661
(43) Veröffentlichungstag der Anmeldung: 29.04.2009
(73) Patentinhaber: Evonik Goldschmidt GmbH, 45127 Essen (DE)
(72) Erfinder: LANDERS, Rüdiger, 45257 Essen (DE); DE GANS, Berend-Jan, 45478 Mülheim an der Ruhr (DE)
(86) Internationale Anmeldenummer: PCT/EP2007/057665
(87) Internationale Veröffentlichungsnummer: WO 2008/019928

(56) Entgegenhaltungen:
- EP-A- 0 520 392
- EP-A- 0 976 781
- EP-A- 1 211 279
- US-A- 5 753 735

## Beschreibung

Der Gegenstand der vorliegenden Patentanmeldung betrifft niedrigviskose, wässrige Polyurethanheißweichschaumstabilisatorlösungen enthaltend Polyethersiloxane und deren Verwendung bei der Herstellung von Polyurethanheißweichschäumen sowie den mittels der Polyurethanheißweichschaumstabilisatorlösung hergestellten Polyurethanheißweichschaum.

Polyurethanweichschäume finden heute vielfältige Verwendung zur Herstellung von Matratzen, Polstermöbeln oder Autositzen. Ihre Herstellung erfolgt durch Umsetzung von Isocyanaten mit Polyolen. Schaumstabilisatoren dienen bei der Herstellung von Polyurethanheißweichschäumen zur Stabilisierung des expandierenden Schaums. Ohne diese Stabilisatoren ist die Oberflächenspannung der Reaktionsmischung bei der Polyurethanheißweichschaumherstellung zu hoch, so dass der Polyurethanheißweichschaum bei der Herstellung kollabieren würde.

Zur Schaumstabilisierung von Polyurethanheißweichschäumen werden vor allem Polyethersiloxane verwendet.

In der EP-A1 0 520 392 wird eine oberflächenaktive Zusammensetzung für Polyurethanweichschäume beschrieben, wobei diese Zusammensetzung eine Mischung ist, umfassend eine Komponente A) mit 99,98 Gew.-% bis 90 Gew.-% eines oberflächenaktiven "nicht hydrolisierenden" Siloxanpolyethers, verwendbar bei der Herstellung herkömmlicher Polyurethanweichschäume, wobei dieser Siloxanpolyether Siloxanketten aufweist mit mindestens 26 Si-Atomen ohne verkappte Endgruppen; und eine Komponente B) mit 0,02 Gew.-% bis 10 Gew.-% eines Salzes organischer Säuren mit der allgemeinen Formel AₐMₘ; wobei die Gewichtsangaben auf das Gesamtgewicht des Siloxanpolyethers und des Salzes der organischen Säure bezogen sind.

Eine sehr hohe Konzentration des Polyethersiloxans in der Schaumstabilisatormischung führt üblicherweise zu einem Anstieg der Viskosität. Nachteilig ist, dass eine hohe Viskosität ein gutes Fließverhalten der Schaumstabilisatormischung bei der Verarbeitung beeinträchtig. Ein weiterer Nachteil ist, dass eine schnelle und gleichzeitig homogene Verteilung solch einer Schaumstabilisatormischung in der Polyurethanheißweichschaumreaktionsmischung nur unzureichend möglich ist.

Die hohe Viskosität von Polyethersiloxan enthaltenden Schaumstabilisatormischungen ist insbesondere bei der Herstellung des Polyurethanheißweichschaums von Nachteil, da sie das Pumpen in den Mischkopf erschwert oder sogar unmöglich macht. Als obere Grenze wird technisch eine Viskosität von 5000 mPa·s gesehen. Deshalb werden solche Schaumstabilisatormischungen mit organischen Lösungsmitteln, wie niedermolekularen Diolen, beispielsweise Ethylenglykol, Dipropylenglykol oder Diethylenglykol, gemischt. Teilweise werden auch kurzkettige Polyether, Pflanzenöle oder technische Lösungsmittel, wie Propylencarbonat oder Phthalatverbindungen verwendet. Der Nachteil all dieser Lösungsmittel ist, dass eine Fremdsubstanz in den Polyurethanheißweichschaum eingebracht wird, die für dessen Herstellung eigentlich nicht benötigt wird. Ferner sind diese Substanzen mehr oder weniger umweltgefährdend und brennbar.

Aufgabe der vorliegenden Erfindung ist es, eine niedrig viskose, Polyethersiloxan in hoher Konzentration enthaltende, Schaumstabilisatormischung zur Verfügung zu stellen, die wenigstens einen der vorgenannten Nachteile vermeidet.

Die Aufgabe der vorliegenden Erfindung wird gelöst durch eine niedrigviskose, wässrige Polyurethanheißweichschaumstabilisatorlösung, verwendbar bei der Herstellung von Polyurethanheißweichschäumen, dadurch gekennzeichnet, dass die niedrigviskose, wässrige Polyurethanheißweichschaumstabilisatorlösung die nachstehenden Komponenten umfasst:
≥ 40 Gew.-% bis ≤ 70 Gew.-% Polyethersiloxan,
≥ 0,5 Gew.-% bis ≤ 20 Gew.-% organisches Tensid,
≥ 10 Gew.-% Wasser,
≥ 0 Gew.-% organische Lösungsmittelzusätze,
worin das Polyethersiloxan die nachstehende Formel (I)

R¹-Si(CH₃)₂O-[Si(CH₃)(OSi(CH₃)₂R⁰)O-]ᵤ-[Si(OSi(CH₃)₂R⁰)₂O-]ᵥ-[Si(CH₃)₂O-]_{w}-[SiCH₃R²O-]ₓ-[SiCH₃R³O-]_{y}-[SiCH₃R⁴O]_{z}-[SiR³R⁴O]ₜ-Si(CH₃)₂-R⁵ (I)

aufweist, worin
R⁰=-O-[Si(CH₃)₂O-]_{w}-[SiCH₃R²O-]ₓ-[SiCH₃R³O-]_{y}-[SiCH₃R⁴O]_{z}-Si(CH₃)₂-R⁵,
R¹, R², R³, R⁴ und R⁵ = gleich oder unterschiedlich voneinander jeweils ein Alkyl- oder Arylrest von 1 bis 12 Kohlenstoffatomen oder jeweils -CH₂-R⁶ oder -CH₂-CH₂-R⁶ oder Polyalkylenoxid-Polyether der Formel (II)

   -CₘH₂ₘO(C₂H₄O)ₐ(C₃H₆O)_{b}(C₄H₈O)_{c}(C₆H₅-C₂H₃O)_{d}(C₁₂H₂₄O)₉R⁷ (II),
R⁶ = H, -C₆H₅, -CN, -Alkyl mit C₁ bis C₁₀, -CH-CH₂O (Epoxidring), -Alkyl-OH, -Aryl-OH, - Cl, -OH, -R⁸-O-R⁹, -R⁸-O-CO-R⁹ oder ein divalentes Brückenglied zu einem weiteren Siloxanrest ausgewählt aus der Gruppe Alkylen, -R⁸-O-R⁹-, -R⁸-COO-R⁹, - R⁸-O-R⁹-O-R⁸-, -R⁸-COO-R⁹-OOC-R⁸-, -R⁸-OOC-R⁹-COO-R⁸-,
R⁷ = H, Alkyl-, Acyl-, Acetyl- oder Arylrest, Alkyl- oder Aryl-Urethangruppe oder ein divalentes Brückenglied zu einem weiteren Siloxanrest ausgewählt aus der Gruppe Alkylen, -R⁸-O-R⁹-, -R⁸-COO-R⁹, - R⁸-O-R⁹-O-R⁸-, -R⁸-COO-R⁹-OOC-R⁸-, -R⁸-OOC-R⁹-COO-R⁸-,
R⁸ = Alkyl- oder Aryl-,
R⁹ = Alkyl- oder Aryl-,
u = 0 bis 5,
v = 0 bis 5,
t = 0 bis 15,
w = 15 bis 130,
x = 0 bis 15,
y = 0 bis 15,
z = 0 bis 15,
m = 0 bis 4,
a = ≥ 0 bis ≤ 160,
b = ≥ 0 bis ≤ 140,
c = ≥ 0 bis ≤ 50,
g = ≥ 0 bis ≤ 50,
d = ≥ 0 bis ≤ 50, wobei a + b + c + d + g ≥ 10,
mit der Maßgabe, dass x + y + z + t ≥ 3, und dass mindestens ein Substituent R¹, R², R³, R⁴, R⁵ ein Polyether gemäß Formel li sind, wobei der Gewichtsanteil der vorgenannten Komponenten so gewählt ist, dass der Gesamtgewichtsanteil der Komponenten 100 Gew.-%, bezogen auf die Polyurethanheißweichschaumstabilisatorlösung, nicht übersteigt.

Der Polyether von Formel II kann hinsichtlich der Verteilung der Monomereinheiten auf die Polymerkette statistisch, blockweise oder sich mit einem Gradienten verändernd sein.

Der Polyethersiloxananteil in der Polyurethanheißweichschaumstabilisatorlösung kann sich auch aus mehreren Polyethersiloxanen gemäß Formel I zusammensetzen.

Der Gewichtsanteil der vorgenannten Komponenten, wenn nicht anders angegeben, ist so gewählt, dass der Gesamtgewichtsanteil der Komponenten 100 Gew.-%, bezogen auf die Polyurethanheißweichschaumstabilisatorlösung, nicht übersteigt.

Wenn nicht anders angegeben, beziehen sich die Gewichtsangaben auf das Gesamtgewicht der Polyurethanheißweichschaumstabilisatorlösung.

Wenn nicht anders angegeben können die jeweiligen Komponenten einzeln oder als Gemisch vorliegen. Es ist sogar bevorzugt, dass das Polyethersiloxan als Gemisch vorliegt. Ebenfalls kann es bevorzugt sein, dass das Tensid als Tensidgemisch vorliegt.

Die erfindungsgemäß verwendbaren Verbindungen Polyethersiloxan, organisches Tensid, Wasser, organische Lösungsmittelzusätze sowie gegebenenfalls weitere Additive, sind jeweils unterschiedlich voneinander. Beispielsweise umfassen die Tenside kein erfindungsgemäß verwendbares Polyethersiloxan gemäß der Formel I oder die organische Lösungsmittelzusätze umfassen kein organisches Tensid und umgekehrt.

Es wurde überraschenderweise gefunden, dass die erfindungsgemäßen Polyurethanheißweichschaumstabilisatorlösungen eine deutlich niedrigere Viskosität im Vergleich zu den ansonsten gleichen Zusammensetzungen aber ohne Tensid aufweisen.

Die erfindungsgemäßen Polyurethanheißweichschaumstabilisatorlösungen können bevorzugt ≥ 10 Gew.-% bis ≤ 60 Gew.-% Wasser, insbesondere ≥ 15 Gew.-% bis ≤ 59,5 Gew.-% Wasser und ≥ 0 Gew.-% bis ≤ 20 Gew.-% organische Lösungsmittelzusätze enthalten

Die erfindungsgemäßen Polyurethanheißweichschaumstabilisatorlösungen können eine um wenigstens 10%, vorzugsweise um wenigstens 20%, bevorzugt um wenigstens 30%, noch weiter bevorzugt um wenigstens 40%, außerdem bevorzugt um wenigstens 50% und am meisten bevorzugt um wenigstens 60% niedrigere Viskosität im Vergleich zu den ansonsten gleichen Zusammensetzungen aber ohne Tensid aufweisen.

Die erfindungsgemäße niedrigviskose, wässrige Polyurethanheißweichschaumstabilisatorlösung weist eine Viskosität von ≤ 5000 mPa·s auf.

Noch weiter bevorzugt ist es, wenn die erfindungsgemäße niedrigviskose, wässrige Polyurethanheißweichschaumstabilisatorlösung enthaltend ≥ 40 Gew.-% bis ≤ 50 Gew.-% Polyethersiloxan, bezogen auf das Gesamtgewicht der Polyurethanheißweichschaumstabilisatorlösung, eine Viskosität aufweist, die im Bereich von ≥ 0,05 Pa·s bis ≤ 3 Pa·s, bevorzugt ≥ 0,01 Pa·s bis ≤ 2 Pa·s und besonders bevorzugt ≥ 0,15 Pa·s bis ≤ 1 Pa·s liegt.

Bevorzugt ist auch, wenn die erfindungsgemäße niedrigviskose, wässrige Polyurethanheißweichschaumstabilisatorlösung enthaltend > 50 Gew.-% bis < 65 Gew.-% Polyethersiloxan, bezogen auf das Gesamtgewicht der Polyurethanheißweichschaumstabilisatorlösung, eine Viskosität aufweist, die im Bereich von ≥ 0,1 Pa·s bis ≥ 5 Pa·s, bevorzugt ≥ 0,3 Pa·s bis ≤ 4,5 Pa·s und besonders bevorzugt ≥ 0,4 Pa·s bis ≤ 4 Pa·s liegt.

Als organische Lösungsmittelzusätze können Lösungsmittel verwendet werden, ausgewählt aus der Gruppe umfassend Dipropylenglykol, Butyldiglykol, Ethylenglykol, Diethylenglykol, Propylenglykol, Phthalate, Polyether, tierische und pflanzliche Öle, mineralische Öle und/oder Frostschutzmittel in flüssiger Form.

Besonders bevorzugt handelt es sich bei den organischen Lösungsmittelzusätzen um ein Frostschutzmittel ausgewählt aus der Gruppe umfassend Dipropylenglykol und/oder Propylenglykol.

Gemäß einer weiteren Ausführungsform der vorliegenden Erfindung kann es auch sein, dass keine organischen Lösungsmittel der niedrigviskosen, wässrigen Polyurethanheißweichschaumstabilisatorlösung zugesetzt sind.

Für den Fachmann ist offensichtlich, dass die erfindungsgemäß verwendeten Verbindungen in Form eines Gemisches vorliegen, dessen Verteilung im Wesentlichen durch statistische Gesetzte bestimmt wird. Die Werte für x, y, z, t, u, v, w, m, a, b, c, d und/oder g entsprechen daher Mittelwerten.

Erfindungsgemäß bevorzugt kann R¹ und R⁵ = gleich oder unterschiedlich voneinander jeweils Methyl, Ethyl oder Propyl sein. Besonders bevorzugt ist R¹ und R⁵ = Methyl.

Der Wert t kann vorzugsweise 2 bis 15 und besonders bevorzugt 4 bis 13 oder 0 sein.

Der Wert u kann vorzugsweise 0 bis 4 und besonders bevorzugt 1 bis 2 oder 0 sein.

Der Wert v kann vorzugsweise 0 bis 4 und besonders bevorzugt 1 bis 2 oder 0 sein.

Der Wert w kann 20 bis 120, insbesondere 30 bis 110, vorzugsweise 40 bis 100, weiter bevorzugt 50 bis 95, besonders bevorzugt 55 bis 90 und ganz besonders bevorzugt 60 bis 85 ausmachen. Der Wert w kann vorzugsweise aber auch 40 bis 130, falls u + v = 0 oder w kann vorzugsweise 20 bis 65, falls u + v > 0 bis ≤ 1 oder w kann vorzugsweise 13 bis 43, falls u + v > 1 ausmachen.

Der Wert x kann vorzugsweise 2 bis 15 und besonders bevorzugt 4 bis 13 oder 0 sein.

Der Wert y kann vorzugsweise 2 bis 15 und besonders bevorzugt 4 bis 13 oder 0 sein.

Der Wert z kann vorzugsweise 2 bis 15 und besonders bevorzugt 4 bis 13 oder 0 sein.

Der Wert a kann vorzugsweise 1 bis 105, besonders bevorzugt 5 bis 100 und am meisten bevorzugt 10 bis 90 sein.

Der Wert b kann vorzugsweise 1 bis 105, besonders bevorzugt 5 bis 100 und am meisten bevorzugt 10 bis 90 sein.

Der Wert c kann vorzugsweise 1 bis 40, besonders bevorzugt 2 bis 30 und am meisten bevorzugt 2 bis 20 oder 0 sein.

Der Wert d kann vorzugsweise 1 bis 40, besonders bevorzugt 2 bis 30 und am meisten bevorzugt 2 bis 20 oder 0 sein.

Der Wert g kann vorzugsweise 1 bis 40, besonders bevorzugt 2 bis 30 und am meisten bevorzugt 2 bis 20 oder 0 sein.

Der Wert m kann vorzugsweise 1 bis 4 und bevorzugt 2 bis 3 sein.

Gemäß einer bevorzugten Ausführungsform weist das Polyethersiloxan die nachstehende Formel III auf: 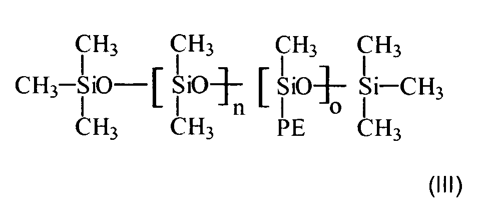 worin
n = 50 bis 120, vorzugsweise 60 bis 100 und bevorzugt 65 bis 90,
o = 3 bis 20, vorzugsweise 3,5 bis 18 und bevorzugt 4 bis 15, und PE die nachstehende Formel IV aufweist: 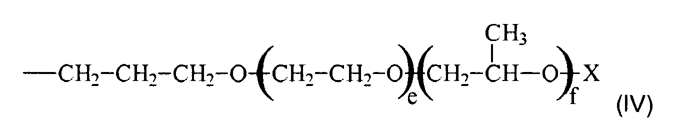 worin
   - X: = H, Alkyl-, Acyl-, Acetyl- oder Arylrest,
   - e: ≥ 0 bis 100, vorzugsweise 1 bis 50, bevorzugt 3 bis 40 und besonders bevor- zugt 5 bis 30,
   - f: ≥ 0 bis 120, vorzugsweise 1 bis 50, bevorzugt 5 bis 40 und besonders bevor- zugt 10 bis 30, wobei e + f ≥ 15.

PE kann dabei auch stellvertretend für eine Mischung verschiedener Polyether stehen, die aber alle durch Formel IV abgebildet sind.

Die Verwendung von Wasser gegenüber organischen Lösungsmitteln hat den weiteren Vorteil, dass Wasser nahezu unbegrenzt verfügbar, nicht toxisch und nicht entflammbar ist. Ferner lassen sich wässrige Lösungen beim Reinigen leicht entfernen und ohne technischen Aufwand entsorgen. Ein weiterer Vorteil ist, dass die Sicherheitsbestimmungen für die Lagerung von wässrigen Lösungen generell weniger streng sind. Insgesamt gesehen lassen sich durch die Verwendung von Wasser als Lösungsmittel der Aufwand und dadurch bedingt die Herstellungskosten der erfindungsgemäßen Polyurethanheißweichschaumstabilisatorlösung gegenüber nicht wässrigen Systemen deutlich senken.

Gemäß einer bevorzugten Ausführungsform enthält die erfindungsgemäße Polyurethanheißweichschaumstabilisatorlösung als Lösungsmittel hauptsächlich Wasser.

Die erfindungsgemäß verwendbaren Polyethersiloxane werden im Allgemeinen hergestellt durch eine platinkatalysierte Additionsreaktion eines Siloxans enthaltend Silanwasserstoffatome mit linearen Polyoxyalkylenoxid-Polyethern, deren lineare Ketten an dem reaktiven Ende abgeschlossen wird von einer Alkylenoxygruppe, wie Allyloxy- oder Vinyloxy-, und an dem anderen Ende beispielsweise mit einer Alkoxy-, Aralkyloxy- oder Acyloxygruppe verschlossen (verkappt) ist. Die Herstellung der Polyether erfolgt durch Alkoxylierung von Allylalkohol oder höhermolekularen hydroxyfunktionellen Allyl- oder Vinylverbindungen. Die Endverkappung der OH-Gruppen der Polyether kann aber auch erst nach der Hydrosilylierung erfolgen. In diesem Fall werden nur oder überwiegend unverkappte Polyether für die Hydrosilylierung eingesetzt.

Die Herstellung von Polyethersiloxanen ist allgemein und unter anderem in den Schutzrechten EP-A1 0 520 392 und EP-A1 1 350 804 dargelegt und hiermit als Referenz aufgenommen.

Die Endgruppe des Polyethers kann ausgehend von der Alkoxylierung zunächst eine freie OH-Funktion aufweisen. Diese Hydroxylgruppe kann auch in dem erfindungsgemäßen Polyethersiloxan zumindest teilweise noch vorhanden sein. Bei den bevorzugten Polyethersiloxanen sind die Endgruppen allerdings vollständig oder zumindest überwiegend endverschlossen. Dies kann durch Veresterung, vorzugsweise Acetylierung, oder durch Veretherung, vorzugsweise Methylierung, der freien OH-Funktion geschehen.

Die erfindungsgemäß verwendbaren Polyethersiloxane können insbesondere eine gute Hydrolysestabilität aufweisen, so dass man die erfindungsgemäßen Polyethersiloxane als hydrolysestabil bezeichnen kann.

Erfindungsgemäß verwendbare Polyethersiloxane weisen ein hohes Molekulargewicht auf, wodurch ihre Viskosität unverdünnt für eine direkte Verarbeitung zu hoch ist. Die Viskosität solcher unverdünnten Polyethersiloxane kann bei ≥ 1000 mPas bei 25°C liegen, für die meisten Polyethersiloxane, die für die Stabilisierung von Polyurethanheißweichschaum verwendet werden, liegt sie über 3000 mPa·s bei 25°C, für einzelne Vertreter der erfindungsgemäßen Polyethersiloxane kann die Viskosität sogar knapp unterhalb von 6000 mPas bei 25°C liegen. Hohe Viskositäten stellen aber bei der Herstellung von Polyurethanheißweichschaum ein Problem dar, weil unter anderem ein Pumpen in den Mischkopf erschwert wird.

Im Stand der Technik wurden Polyethersiloxane deshalb mit organischen Lösungsmitteln verdünnt, was mit den oben beschriebenen Nachteilen verbunden ist. Typische Gehalte an Polyethersiloxanen in Polyurethanheißweichschaumstabilisatoren gemäß dem Stand der Technik sind 50 bis 70 Gew.-%, der Rest ist organisches Lösungsmittel.

Die Verwendung von Wasser als Lösungsmittel für Polyethersiloxane, die im Polyurethanheißweichschaum als Stabilisator eingesetzt werden, wurde bisher nicht in Erwägung gezogen, da bei der Herstellung von Mischungen von erfindungsgemäßen Polyethersiloxanen mit Wasser im Konzentrationsbereich von 40 bis 80 Gew.-% Polyethersiloxan, in der Mischung ein drastischer Anstieg der Viskosität beobachtet wird. Die dabei auftretenden Viskositäten überschreiten dabei deutlich das Niveau des reinen Polyethersiloxans. Ursache des Viskositätsanstiegs ist das Auftreten lyotrop flüssigkristalliner Phasen. Diese Beruhen auf einer mehrdimensional geordneten Packung von amphiphilen Tensidmolekülen. Solche amphiphile Tensidmoleküle umfassen beispielsweise auch die erfindungsgemäß verwendeten Polyethersiloxane. Derartige lyotrope Mesophasen weisen dabei oft eine anisotrope Verteilung physikalischer Eigenschaften im Raum auf. Je nach der jeweiligen Packungsart erreichen die Viskositäten dabei Werte, die ein Fliessen des Materials vollständig unterbinden und damit einen gelartigen Charakter bedingen.

So kann eine wässrige Lösung mit einem Polyethersiloxananteil von 40 Gew.-%, bezogen auf die wässrige Lösung, bereits eine Viskosität von deutlich über 5 Pa·s aufweisen, so dass man hier nicht mehr von niedrig viskosen wässrigen Lösungen sprechen kann. Wässrige Lösungen mit einem Polyethersiloxananteil von 50 Gew.-% bis 70 Gew.-% weisen noch höhere Viskositäten auf, die meist deutlich über 50 Pa·s liegen. Das Maximum der Viskosität wird dabei bei etwa 60 Gew.-% Polyethersiloxan und 40 Gew.-% Wasser erreicht.

Wässrige Lösungen mit einem Polyethersiloxananteil von < 40 Gew.-% sind bereits aufgrund ihrer niedrigen Konzentration ungeeignet, weil insbesondere die erhöhte Wassermenge sich bei der Herstellung von Polyurethanheißweichblockschäumen mit hohem Raumgewicht nachteilig auf die Porendichteverteilung und besonders das Raumgewicht auswirkt, da Wasser als chemisches Treibmittel für die Polyurethanheißweichschaumherstellung fungiert. Eine so hohe Wassermenge in der Stabilisatormischung lässt daher nur die Herstellung von Schäumen mit niedrigerem Raumgewicht (insgesamt höhere eingesetzte Wassermenge) zu. Ein weiterer Nachteil solcher stark verdünnten Lösungen sind die im Vergleich zu konzentrierteren Lösungen höheren Transportkosten und das Abweichen von dem etablierten Aktivitätsniveau von Polyurethanheißweichschaumstabilisatoren.

Wässrige Lösungen mit einem Polyethersiloxangehalt von > 80 Gew.-% sind ebenfalls aufgrund der hohen Viskosität nicht geeignet. Eine Wassermenge von < 20 Gew.-% ist nicht ausreichend, die Viskosität ausreichend abzusenken, um eine niedrigviskose Lösung des Polyethersiloxans zur Verfügung zu stellen. Dabei ist es meist sogar so, dass die Zugabe von < 20 Gew.-% Wasser eine Erhöhung der Viskosität im Vergleich zu dem reinen Polyethersiloxan bewirkt. Auch die Zugabe von Tensiden ändert hieran nichts.

Erfindungsgemäß bevorzugte niedrigviskose, wässrige Polyurethanheißweichschaumstabilisatorlösungen weisen einen Gehalt von Polyethersiloxan von 40 Gew.-% bis 70 Gew.-% mit einer Viskosität < 5000 mPa·s (5 Pa·s) bei 25°C auf.

Es wurde nunmehr überraschend gefunden, dass durch die Zugabe von organischen Tensiden das Auftreten der hohen Viskositäten bei 40 bis 70 Gew.-% Polyethersiloxan in der wässrigen Abmischung unterdrückt werden kann. Bestimmte anionische Tenside waren hierbei sehr effektiv.

Bevorzugte wässrige Polyurethanheißweichschaumstabilisatorlösung, weisen eine geringe Viskosität und somit ein gutes Fließverhalten aufweist. Die Polyurethanheißweichschaumstabilisatorlösung gemäß der vorliegenden Erfindung kann eine Viskosität von ≥ 100 mPa·s bis ≤ 5 5.000 mPa·s, vorzugsweise eine Viskosität von ≥ 500 mPa·s bis ≤ 3000 mPa·s, bevorzugt eine Viskosität von ≥ 700 mPa·s bis ≤ 2000 mPa·s und besonders bevorzugt eine Viskosität von ≥ 900 mPa·s bis ≤ 1800 mPa·s, gemessen in einem Rotationssexperiment bei 25° C bei einer Scherrate von 1 s⁻¹ unter Verwendung eines Rotationsviskosimeters MCR301 der Firma Physica (Anton Paar, Ostfildern, Germany). Proben mit einer Viskosität > 100 mPa·s wurden mit einer Kegel-Platte Geometrie (Durchmesser = 50,0 mm, Winkel = 0,981 °) vermessen. Proben mit einer Viskosität < 100 mPa·s wurden mit einer Couette Geometrie untersucht (Durchmesser Messkörper = 26,66 mm, Messbecherdurchmesser = 28,93 mm, Messspaltbreite = 1,135 mm, Messspaltlänge = 40,014 mm). Weil manche Proben strukturviskoses Verhalten zeigten, wurden die Proben zuerst 60 Sekunden bei 1000 s⁻¹ geschert, um kontrollierte Anfangsbedingungen zu schaffen. Danach wurden die Proben 10 Minuten belassen ohne zu scheren. Während dieser Zeit konnte sich die Struktur erneut aufbauen. Danach wurde die Viskosität gemessen bei einer Scherrate von 1 s⁻¹. Dabei wurde bis zu 10 Minuten geschert, bis ein Gleichgewicht erreicht wurde. Proben die kein strukturviskosen Verhalten zeigten, wurden ohne Vorbehandlung direkt bei 1 s⁻¹ gemessen bis das Gleichgewicht erreicht war.

Ein Vorteil ist, dass man stabile, lagerfähige Polyurethanheißweichschaumstabilisatorlösungen erhalten kann, die trotz der Verwendung von Wasser als Lösungsmittel in den beanspruchten Bereichen, bei einer Lagerung der Polyurethanheißweichschaumstabilisatorlösung nicht oder praktisch nicht zu Ausfällungen neigen, die sich am Boden eines Behälters absetzen oder aufrahmen. Dies ist vorteilhaft, da sich auf diese Weise Polyurethanheißweichschaumstabilisatorlösungen erhalten lassen die eine gute homogene Verteilung der Komponenten aufweist.

Ein weiterer Vorteil dieser erfindungsgemäßen wässrigen Polyurethanheißweichschaumstabilisatorlösungen ist, dass sie auch bei Temperaturerhöhung klar und homogen bleiben. So wurden teilweise bis deutlich über 50°C keine Veränderungen der wässrigen Lösungen beobachtet.

Ein weiterer Vorteil der erfindungsgemäßen Polyurethanheißweichschaumstabilisatorlösung ist, dass man geringe Mengen, beispielsweise 5 Gew.-% bis 10 Gew.-% einer Komponente zugeben kann, die als Frostschutzmittel fungiert. Geeignete Stoffe sind zum Beispiel niedermolekulare Monoole oder Diole wie, Ethanol, Isopropanol, Dipropylenglykol, Ethylenglykol oder Butyldiglykol. Solche froststabilisierten erfindungsgemäßen wässrigen Polyurethanheißweichschaumstabilisatorlösungen gefrieren auch bei - 20 °C nicht.

Das Gefrieren der Polyurethanheißweichschaumstabilisatorlösung wäre ein großes Problem, da dann nur Wasser gefrieren würde. Polyethersiloxane werden in die Eiskristallstruktur nicht eingebaut und nach dem Auftauen wäre eine Phasenseparation zu beobachten, die nur durch intensives Rühren zu beseitigen wäre.

Allerdings werden froststabilisierte, wässrige Polyurethanheißweichschaumstabilisatorlösungen bei tiefen Temperaturen sehr hochviskos. Dieser Vorgang stellt aber kein Problem dar, da die Rohstoffe bei der Polyurethanheißweichschaumherstellung im Regelfall auf Raumtemperatur (23°C) temperiert werden. Nach dem Erwärmen der kalten froststabilisierten wässrigen Polyurethanheißweichschaumstabilisatorlösung auf Raumtemperatur wird wieder die niederviskose Polyurethanheißweichschaumstabilisatorlösung erhalten.

Ein weiterer Vorteil der erfindungsgemäßen Polyurethanheißweichschaumstabilisatorlösung ist es, dass nun auch problemlos zusätzliche Stoffe zugegeben werden können, die sehr hydrophil sind und sich in reinen Polyethersiloxanen oder Lösungen von Polyethersiloxanen in organischen Lösungsmitteln nicht oder zumindest nur sehr unvollständig lösen. Dies sind zum einen salzartige Additive und zum anderen polyhydroxyfunktionelle Additive. Bei der ersten Gruppe können zum Beispiel Lithium-, Natrium- oder Kaliumsalze zugeseizt werden. Solche Salze wirken auch als Frostschutzmittel. Die zugesetzten Salze können dabei auch eine katalytische Wirkung bei der Herstellung des Polyurethanheissweichschaums ausüben. Der Anteil der salzartigen zusätzlich zugesetzten Verbindungen bezogen auf die Polyurethanheißweichschaumstabilisatorlösung kann dabei bevorzugt ≥ 0 Gew.-% bis ≤ 5 Gew.-% betragen. Als Elektrolyte aus der Gruppe der anorganischen Salze kann eine breite Anzahl der verschiedensten Salze eingesetzt werden. Bevorzugte Kationen sind die Alkali- und Erdalkalimetalle, bevorzugte Anionen sind die Halogenide, Sulfate und Carboxylate, wie zum Beispiel Alkalibenzoate oder Alkaliacetate.

Die erfindungsgemäße Polyurethanheißweichschaumstabilisatorlösung kann bevorzugt zusätzlich polyhydroxyfunktionelle Additive enthalten, die eine Funktionalität von Hydroxylgruppen von ≥ 3 besitzen und bei der Polyurethanheißweichschaumherstellung als Vernetzer wirken. Der Anteil der polyhydroxyfunktionellen Verbindungen kann dabei zwischen ≥ 0 und ≤ 10 Gew.-% bezogen auf die Polyurethanheißweichschaumstabilisatorlösung betragen. Die polyhydroxyfunktionellen Verbindungen können vorzugsweise ausgewählt sein aus der Gruppe umfassend Glyzerin, Trimetholpropan, Pentaerythrit, wasserlösliche niedermolekulare Kohlehydrate , insbesondere mono oder dimere Glykoside, wasserlösliche Zuckeralkohole, bevorzugt Sorbitol.

Die Verwendung von polyhydroxyfunktionellen Verbindungen, die eine Funktionalität ≥ 3 aufweisen, kann vorteilhaft sein, da diese Verbindungen bei der Herstellung des Polyurethanheissweichschaums zusätzlich zur physikalischen Stabilisierung durch das Polyethersiloxan noch eine chemische Stabilisierung durch verstärkte Vernetzung beitragen können. Diese Vernetzer erlauben bei Zugabe zu wässrigen, niederviskosen Stabilisatorlösungen eine zusätzliche Steuerung des Verschäumungsverhaltens, die bisher nur durch separate Zugabe von Vernetzern möglich war.

Weiterhin können die erfindungsgemäßen Polyurethanheißweichschaumstabilisatorlösungen zusätzlich übliche Additive wie Katalysatoren, Treibmittel, Biozid und/oder Flammschutzmittel enthalten. Biozide können dabei gegebenenfalls die Gefahr einer mikrobiellen Verunreinigung der wässrigen Polyurethanheißweichschaumlösung reduzieren und damit die Haltbarkeit erhöhen. Geeignet verwendbare Biozide sind insbesondere Biozide, wie sie in der Europäischen Biozidrichtlinie - Biocidal Products Directive 98/8/EC, List of Substances - hinterlegt sind.

Weiterhin können als zusätzliche Additive auch Antioxidantien eingesetzt werden. Diese können dabei die Oxidationsstabilität der wässrigen Polyurethanheißweichscahumstabilisatorlösung verlängern. Geeignete Antioxidantien sind vorzugsweise sterisch gehinderte Phenole wie zum Beispiel Butylhydroxytoluol (BHT).

Weiterhin können als zusätzliche Additive auch Puffersubstanzen zur Einstellung eines neutralen oder leicht basischen pH-Wertes eingesetzt werden. Geeignete Puffersubstanzen sind vorzugsweise Phosphatpuffer, Boratpuffer, Aminosäuren, Carbonatpuffer oder Puffer basierend auf den Salzen tertiärer Amine.

Es lassen sich Polyethersiloxane mit einer breiten Molekulargewichtsverteilung verwenden, wobei stabile Polyurethanheißweichschaumstabilisatorlösungen erhalten werden. Gemäß der vorliegenden Erfindung können Polyethersiloxane verwendet werden, die ein Molekulargewicht von 10000 g/mol bis 50000 g/mol, vorzugsweise von 13000 g/mol bis 40000 g/mol und bevorzugt von 15000 g/mol bis 35000 g/mol aufweisen.

Außerdem hat sich gezeigt, dass Polyurethanheißweichschaumstabilisatorlösungen, die Polyethersiloxane aufweisen, worin die Polyethereinheiten eine Molmasse von 500 g/mol bis 7000 g/mol, vorzugsweise 1000 g/mol bis 6000 g/mol, bevorzugt 2000 g/mol bis 5000 g/mol besitzen, gute Produkteigenschaften hinsichtlich Stabilität der Lösung und/oder Konzentrationsverteilung der Polyethersiloxankomponente aufweisen. Besonders bevorzugt ist daher, dass wenigstens eine Polyethereinheit eine mittlere Molmasse von Mn ≥ 2100 g/mol hat.

Der Anteil an Ethylenoxid in einer erfindungsgemäß bevorzugt verwendbaren Polyethereinheit kann 10 Gew.-% bis 100 Gew.-% ausmachen, wobei der Gehalt an Propylenoxid dann entsprechend angepasst ist, d.h. bei 10 Gew.-% Ethylenoxid macht der Anteil Propylenoxid in der Polyethereinheit 90 Gew.-% und wenn der Ethylenoxidgehalt bei 100 Gew.-% liegt, macht der Anteil Propylenoxid in der Polyethereinheit 0 Gew.-% aus.

Gemäß einer bevorzugten Ausführungsform der vorliegenden Erfindung, kann aber auch der Anteil an Propylenoxid in der Polyethereinheit 10 Gew.-% bis 100 Gew.-% ausmachen, wobei der Gehalt an Ethylenoxid dann entsprechend angepasst ist, d.h. bei 10 Gew.-% Propylenoxid macht der Anteil Ethylenoxid in der Polyethereinheit 90 Gew.-% und wenn der Propylenoxidgehalt bei 100 Gew.-% liegt, macht der Anteil Ethylenoxid in der Polyethereinheit 0 Gew.-% aus.

Gute Eigenschaften für die Polyurethanheißweichschaumstabilisatorlösung im Hinblick auf die Porenverteilung und Güte des Polyurethanheißweichschaums erhält man, wenn der Propylenoxidanteil, gemittelt über alle Polyethereinheiten des Polyethersiloxans, 40 Gew.-% bis 90 Gew.-%, vorzugsweise ≥ 50 Gew.-%, bevorzugt ≥ 55 Gew.-%, und besonders bevorzugt ≥ 60 Gew.-% ausmacht.

Es können zusätzlich aber auch weitere Alkylenoxide in die Polyether eingebaut werden. Hierzu zählen besonders Butylenoxid, Dodecenoxid und Styroloxid.

Für die Verwendung bei der Herstellung der Polyurethanheißweichschäume sind erfindungsgemäß Polyurethanheißweichschaumstabilisatorlösungen besonders geeignet, worin eine Polyurethanheißweichschaumstabilisatorlösung umfasst:
- ≥ 42 Gew.-% bis ≤ 68 Gew.-%, vorzugsweise ≥ 45 Gew.-% bis ≤ 65 Gew.-% und bevorzugt ≥ 47 Gew.-% bis ≤ 62 Gew.-% Polyethersiloxan, wobei ein Polyethersiloxangehalt von 50 Gew.-% bis 60 Gew.-% besonders bevorzugt ist,
- ≥ 1 Gew.-% bis ≤ 10 Gew.-%, vorzugsweise ≥ 2 Gew.-% bis ≤ 8 Gew.-% und bevorzugt ≥ 4 Gew.-% bis ≤ 6 Gew.-% organisches Tensid,
- ≥ 15 Gew.-% bis ≤ 55 Gew.-%, vorzugsweises 20 Gew.-% bis ≤ 50 Gew.-% und bevorzugt ≥ 30 Gew.-% bis ≥ 40 Gew.-% Wasser, und
- ≥ 0 Gew.-% bis ≥ 15 Gew.-%, vorzugsweise ≥ 1 Gew.-% bis ≤ 10 Gew.-% und bevorzugt ≥ 2 Gew.-% bis ≤ 5 Gew.-% organische Lösungsmittelzusätze, vorzugsweise ein als Frostschutzmittel wirkendes organisches Lösungsmittel.

Gegebenenfalls kann die Polyurethanheißweichschaumstabilisatorlösung als zusätzliche Komponente noch weitere Additive aufweisen. Der Anteil der vorstehenden Komponenten der Polyurethanheißweichschaumstabilisatorlösung ist jeweils so ausgewählt, dass der Gesamtanteil der Komponenten 100 Gew.-% nicht übersteigt.

Eine erfindungsgemäß bevorzugte Polyurethanheißweichschaumstabilisatorlösung umfasst:
- ≥ 45 Gew.-% bis ≤ 55 Gew.-%, vorzugsweise 50 Gew.-% Polyethersiloxan,
- ≥ 1 Gew.-% bis ≤ 10 Gew.-%, vorzugsweise ≥ 2 Gew.-% bis ≤ 8 Gew.-% und bevorzugt 5 Gew.-% Alkylbenzolsulfonat,
- ≥ 30 Gew.-% bis ≤ 50 Gew.-%, vorzugsweise ≥ 35 Gew.-% bis ≤ 45 Gew.-% und bevorzugt 40 Gew.-% Wasser, und
- ≥ 1 Gew.-% bis ≤ 10 Gew.-%, vorzugsweise ≥ 3 Gew.-% bis ≤ 7 Gew.-% und bevorzugt 5 Gew.-% Dipropylenglykol.

Gegebenenfalls kann die Polyurethanheißweichschaumstabilisatorlösung als zusätzliche Komponente noch weitere Additive aufweisen. Der Anteil der vorstehenden Komponenten der Polyurethanheißweichschaumstabilisatorlösung ist jeweils so ausgewählt, dass der Gesamtanteil der Komponenten 100 Gew.-% nicht übersteigt.

Es versteht sich von selbst, dass die jeweiligen Komponenten so aufeinander abgestimmt werden, dass die Viskosität möglichst niedrig ist. Erfindungsgemäß gewünschte Viskositätsbereiche sind für die Polyurethanheißweichschaumstabilisatorlösung bereits vorstehend beschrieben worden. Die gewünschte Viskosität lässt sich durch entsprechende Erhöhung oder Verringerung des organischen Tensidanteils und/oder durch das Verhältnis Wasser zu Polyethersiloxan einstellen. Gegebenenfalls kann man die Viskosität der Polyurethanheißweichschaumstabilisatorlösung durch entsprechenden Zusatz von anorganischen Salzen noch weiter beeinflussen.

Um eine gute Konzentrationsverteilung der Polyurethanheißweichschaumstabilisatorlösung in der Polyurethanheißweichschaumreaktionsmischung zu gewährleisten, sind bevorzugt homogene und transparente Lösungen der Polyurethanheißweichschaumstabilisatorlösung verwendbar. Derartige transparente Polyurethanheißweichschaumstabilisatorlösungen können beispielsweise eine klare oder leicht trübe Lösung sein. Geeignete transparente Polyurethanheißweichschaumstabilisatorlösungen können beispielsweise auch opak schimmern.

Bei Polyurethanheißweichschaumstabilisatorlösungen, die Ausflockungen oder einen Bodensatz aufweisen, handelt es sich nicht erfindungsgemäß um geeignete Polyurethanheißweichschaumstabilisatorlösungen, soweit die Viskosität oberhalb von 5.000 mPa·s liegt.

Ausflockungen und/oder die Ausbildung eines Bodensatzes lassen sich durch entsprechende Einstellung des Verhältnisses Wasser, Tensid und Polyethersiloxan vermeiden, wobei eine Erhöhung der Tensidkonzentration und gleichzeitiger Erniedrigung der Polyethersiloxankonzentration die erfindungsgemäß bevorzugten niedrigviskosen Polyurethanheißweichschaumstabilisatorlösungen ergibt.

Die erfindungsgemäßen Polyurethanheißweichschaumstabilisatorlösungen sind bei Raumtemperatur lagerstabil. Es hat sich gezeigt, dass erfindungsgemäße Polyurethanheißweichschaumstabilisatorlösungen über einen Zeitraum von mindestens 14 Tagen keine Phasentrennung und/oder Ausfällung aufweisen. Die gute Lagerstabilität sowie die Vermeidung von Ausfällungen, wie Ausflockungen, lassen sich über das Verhältnis der Komponenten organisches Tensid, Polyethersiloxan, Wasser und ggf. anorganische Salze einstellen.

Gemäß der vorliegenden Erfindung weisen bevorzugte Polyurethanheißweichschaumstabilisatorlösungen keine Ausflockungen und/oder Bodensatz auf.

Die erfindungsgemäßen Polyurethanheißweichschaumstabilisatorlösungen zeichnen sich auch durch einen erhöhten Trübungspunkt im Vergleich zu den Abmischungen von Polyethersiloxanen in Wasser ohne Tensid auf, obwohl die erfindungsgemäßen Polyurethanheißweichschaumstabilisatorlösungen einen hohen Wassergehalt aufweisen. Bevorzugte erfindungsgemäße Polyurethanheißweichschaumstabilisatorlösungen weisen einen Trübungspunkt von ≥ 40° C, vorzugsweise ≥ 50° C und bevorzugt ≥ 60° C auf.

Organische Tenside, die für die Polyurethanheißweichschaumstabilisatorlösung verwendbar sind, können ausgewählt sein aus der Gruppe umfassend anionische Tenside, kationische Tenside, nichtionische Tenside und/oder amphotere Tenside, wobei das organische Tensid vorzugsweise ein Aniontensid ist. Die Polyurethanheißweichschaumstabilisatorlösungen gemäß der Erfindung enthalten vorzugsweise ein oder mehrere Tenside, die aus anionischen, nichtionischen, kationischen, ampholytischen (amphoteren, zwitterionischen) Tensiden und Mischungen davon ausgewählt sind.

Eine typische Auflistung anionischer, kationischer, nichtionischer und ampholytischer (zwitterionischer) Klassen und Arten dieser Tenside ist in US-Patent Nr. 3,929,678 und in US-Patent Nr. 4,259,217 angegeben, welche hiermit als Referenz eingeführt werden und auf deren Inhalt im vollen Umfang Bezug genommen wird.

Vorzugsweise werden ampholytische, amphotere und zwitterionische Tenside im Allgemeinen in Kombination mit einem oder mehreren anionischen und/oder nichtionischen Tensiden verwendet.

### Anionisches Tensid

Die erfindungsgemäßen Zusammensetzungen umfassen vorzugsweise ein anionisches Tensid. Im Wesentlichen jedes für Reinigungszwecke geeignete anionische Tensid kann in der Polyurethanheißweichschaumstabilisatorlösung enthalten sein. Diese können Salze einschließlich zum Beispiel Natrium-, Kalium-, Ammonium- und substituierte Ammoniumsalze, wie Mono-, Di- und Triethanolaminsalze der anionischen Sulfat-, Sulfonat-, Carboxylat- und Sarcosinattenside einschließen. Anionische Sulfat- und Sulfonattenside sind bevorzugt. Stark bevorzugt sind Tensidsysteme, die ein Sulfonat- oder ein Sulfattensid umfassen, vorzugsweise ein lineares oder verzweigtes Alkylbenzolsulfonat und Alkylethoxysulfate, wie hierin beschrieben, eventuell auch kombiniert mit kationischen Tensiden, wie hierin beschrieben.

Andere anionische Tenside umfassen die Isethionate, wie die Acylisethionate, N-Acyltaurate, Fettsäureamide von Methyltaurid, Alkylsuccinate und Sulfosuccinate, Monoester von Sulfosuccinat (besonders gesättigte und ungesättigte C₁₂-C₁₈-Monoester), Diester von Sulfosuccinat (besonders gesättigte und ungesättigte C₆-C₁₄-Diester), N-Acylsarcosinate. Harzsäuren und hydrierte Harzsäuren, wie Kolophonium, hydriertes Kolophonium und Harzsäuren und hydrierte Harzsäuren, die in Talgöl vorhanden oder davon abgeleitet sind, sind ebenfalls geeignet.

### Anionisches Sulfattensid

Anionische, zum diesbezüglichen Gebrauch geeignete Sulfattenside umfassen die linearen und verzweigten, primären und sekundären Alkylsulfate, Alkylethoxysulfate, Fettoleylglycerinsulfate, Alkylphenolethylenoxidethersulfate, die C₅-C₁₇-Acyl-N-(C₁-C₄-alkyl-) und -N-(C₁-C₂-hydroxyalkyl)glucaminsulfate, und Sulfate der Alkylpolysaccharide, wie die Sulfate von Alkylpolyglucosid (wobei die nichtionischen nicht sulfatierten Verbindungen hierin beschrieben sind).

Alkylsulfattenside sind vorzugsweise ausgewählt aus den linearen und verzweigten, primären C₁₀-C₁₈-Alkylsulfaten, bevorzugter den verzweigtkettigen C₁₁-C₁₅-Alkylsulfaten und den geradkettigen C₁₂-C₁₄-Alkylsulfaten.

Alkylethoxysulfattenside sind vorzugsweise ausgewählt aus der Gruppe, bestehend aus den C₁₀-C₁₈-Alkylsulfaten, die mit 0,5 bis 20 Mol Ethylenoxid pro Molekül ethoxyliert sind. Mehr bevorzugt ist das Alkylethoxysulfattensid ein C₁₁-C₁₈-, am meisten bevorzugt C₁₁-C₁₅ Alkylsulfat, das mit 0,5 bis 7, vorzugsweise 1 bis 5 Mol Ethylenoxid pro Molekül ethoxyliert ist.

Ein besonders bevorzugter Gesichtspunkt der Erfindung verwendet Mischungen der bevorzugten Alkylsulfat- und/oder Sulfonat- und Alkylethoxysulfattenside. Solche Mischungen sind in PCT- Patentanmeldung WO 93/18124 offenbart worden, auf die in vollem Umfang Bezug genommen wird.

### Anionisches Sulfonattensid

Anionische, zum diesbezüglichen Gebrauch geeignete, Sulfonattenside umfassen die Salze der linearen C₅-C₂₀- Alkylbenzolsulfonate, Alkylestersulfonate, primäre oder sekundäre C₆-C₂₂-Alkansulfonate, C₆-C₂₄-Olefinsulfonate, Arylsulfonate (besonders unsubstituierte als auch alkylsubstituierte Benzol- und Naphtalinsulfonate), sulfonierte Polycarbonsäuren, Alkylglycerinsulfonate, fettige Acylglycerinsulfonate, Monoester von Sulfosuccinat (besonders gesättigte und ungesättigte C₁₂-C₁₈-Monoester), Diester von Sulfosuccinat (besonders gesättigte und ungesättigte C₆-C₁₄-Diester), fettige Oleylglycerinsulfonate und jede beliebige Mischung davon.

### Anionisches Carboxylattensid

Geeignete anionische Carboxylattenside umfassen die Alkylethoxycarboxylate, die Alkylpolyethoxypolycarboxylattenside und die Seifen ("Alkylcarboxyle"), besonders bestimmte sekundäre Seifen wie hierin beschrieben.

Geeignete Alkylethoxycarboxylate umfassen diejenigen mit der Formel RO(CH₂CH₂O)ₓCH₂ COO-M^{®}, worin R eine C₆- bis C₁₈-Alkylgruppe ist, x im Bereich von 0 bis 10 liegt und die Ethoxylatverteilung so ist, dass die Menge an Material, wo x 0 ist, weniger als 20 Gew.-% ist und M ein Kation ist. Geeignete Alkylpolyethoxypolycarboxylattenside umfassen diejenigen mit der Formel RO(CHR¹-CHR²-O)-R³, worin R eine C₆ bis C₁₈- Alkylgruppe ist, x von 1 bis 25 ist, R¹ und R² ausgewählt sind aus der Gruppe, bestehend aus Wasserstoff, Methylsäurerest, Bernsteinsäurerest, Hydroxybernsteinsäurerest und Mischungen davon, und R³ ausgewählt ist aus der Gruppe, bestehend aus Wasserstoff, substituiertem oder unsubstituiertem Kohlenwasserstoff, der zwischen 1 und 8 Kohlenstoffatome aufweist, und Mischungen davon.

Geeignete Seifentenside umfassen die sekundären Seifentenside, die eine Carboxyleinheit, die an einen sekundären Kohlenstoff gebunden ist, enthalten. Bevorzugte sekundäre Seifentenside zur erfindungsgemäßen Verwendung in Polyurethanheißweichschaumstabilisatorlösungen sind wasserlösliche Glieder, die ausgewählt sind aus der Gruppe, bestehend aus den wasserlöslichen Salzen von 2-Methyl-1-undecansäure, 2- Ethyl-1-decansäure, 2-Propyl-1-nonansäure, 2-Butyl-1-octansäure und 2-Pentyl-1-heptansäure.

### Sarcosinattensid

Andere geeignete anionische Tenside sind die Sarcosinate der Formel R-CON(R¹)CH₂COOM, worin R eine lineare oder verzweigte C5-C17-Alkyl-; oder Alkenylgruppe ist, R¹ eine C₁- C₄-Alkylgruppe ist und M ein Alkalimetallion ist. Bevorzugte Beispiele sind die Myristyl- und Oleoylmethylsarcosinate in der Form ihrer Natriumsalze.

Das anionische Tensid kann besonders bevorzugt ausgewählt sein aus der Gruppe umfassend Alkylsulfate, Arylsulfonate, Fettalkoholsulfate, sekundäre Alkylsulfate, Paraffinsulfonate, Alkylethersulfate, Alkylpolyglykolethersulfate, Fettalkolholethersulfate, Alkylbenzolsulfonate, Alkylphenolethersulfate, Alkylphosphate, Phosphorsäure-mono-,di-, tri-Ester, Alkyletherphosphate, Ethoxylierte Fettalkoholphosphorsäureester, Phosphonsäureester, Sulfobernsteinsäurediester, Sulfobernsteinsäuremonoester, ethoxylierte Sulfobernsteinsäuremonoester, Sulfosuccinamide, α-Olefinsulfonate, Alkylcarboxylate, Alkylethercarboxylate, Alkylpolyglykolcarboxylate, Fettsäureisethionat, Fettsäuremethyltaurid, Fettsäuresarkosid, Arylsulfonate, Naphtalinsulfonate, Alkylglycerylethersulfonate, Polyacrylate und/oder α-Sulfofettsäureester.

### Kationische Tenside

Geeignete kationische Tenside die als Tensidkomponente für die Polyurethanheißweichschaumstabilisatorlösung verwendet werden können, umfassen quartäre Ammoniumtenside. Vorzugsweise ist das quartäre Ammoniumtensid ein Mono-C₆-C₁₆-, vorzugsweise -C₆ -C₁₀-N-alkyl- oder -alkenylammoniumtensid, worin die verbleibenden N-Positionen durch Methyl-, Hydroxy-ethyl- oder Hydroxypropylgruppen substituiert sind. Bevorzugt sind ebenfalls die monoalkoxylierten und bisalkoxylierten Amintenside.

Eine andere geeignete Gruppe kationischer Tenside, die in den Polyurethanheißweichschaumstabilisatorlösungen verwendet werden können, sind kationische Estertenside.

Das kationische Estertensid ist eine vorzugsweise wasserdispergierbare Verbindung mit Tensideigenschaften, die mindestens eine Ester-(d. h. -COO-) Bindung und mindestens eine kationisch geladene Gruppe umfasst.

Geeignete kationische Estertenside, einschließlich Cholinestertenside, sind beispielsweise in den US-Patenten 4228042, 4239660 und 4260529 offenbart.

Unter einem bevorzugten Gesichtspunkt sind die Esterbindung und die kationisch geladene Gruppe in dem Tensidmolekül durch eine Distanzgruppe voneinander getrennt, die aus einer Kette besteht, die mindestens drei Atome umfasst (d. h. Kettenlänge von drei Atomen), vorzugsweise drei bis acht Atome, mehr bevorzugt drei bis fünf Atome, am meisten bevorzugt drei Atome. Die Atome, die die Distanzgruppenkette bilden, sind ausgewählt aus der Gruppe, bestehend aus Kohlenstoff-, Stickstoff- und Sauerstoffatomen und jeglichen Mischungen davon, mit der Maßgabe, dass jedes Stickstoff- oder Sauerstoffatom in der Kette nur mit Kohlenstoffatomen in der Kette verbunden ist. Somit sind Distanzgruppen mit beispielsweise -O-O- (d. h. Peroxid-), -N-N- und -N-O- Bindungen ausgeschlossen, während Distanzgruppen mit beispielsweise - CH₂-O-CH₂- und -CH₂-NH-CH₂-Bindungen eingeschlossen sind. Unter einem bevorzugten Gesichtspunkt umfasst die Distanzgruppenkette nur Kohlenstoffatome, am meisten bevorzugt ist die Kette eine Hydrocarbylkette.

### Kationische monoalkoxylierte Amintenside

Bevorzugt verwendbare kationische monoalkoxylierte Amintenside weise die allgemeine Formel V auf:

R¹R²R³N^{⊗}ZₙR⁴ X⁻ (V)

worin R¹ eine Alkyl- oder Alkenyleinheit mit 6 bis 18 Kohlenstoffatomen, vorzugsweise 6 bis 16 Kohlenstoffatomen, am meisten bevorzugt von 6 bis 14 Kohlenstoffatomen ist; R² und R³ jeweils unabhängig Alkylgruppen mit von einer bis drei Kohlenstoffatomen, vorzugsweise Methyl sind, am meisten bevorzugt sowohl R² als auch R³ Methylgruppen sind; R⁴ aus Wasserstoff (bevorzugt), Methyl und Ethyl ausgewählt ist; X- ein Anion, wie Chlorid, Bromid, Methylsulfat, Sulfat oder Ähnliches ist, um elektrische Neutralität bereitzustellen; Z eine Alkoxygruppe, besonders eine Ethoxy-, Propoxy- oder Butoxygruppe ist; und n von 0 bis 30, vorzugsweise 2 bis 15, am meisten bevorzugt 2 bis 8 ist.

Vorzugsweise hat die ZₙR⁴-Gruppe in Formel V n = 1 und ist eine Hydroxyalkylgruppe mit nicht mehr als 6 Kohlenstoffatomen, wobei die -OH- Gruppe durch nicht mehr als 3 Kohlenstoffatome von dem quartären Ammoniumstickstoffatom getrennt ist. Besonders bevorzugte ZₙR⁴-Gruppen sind -CH₂CH₂OH, -CH₂CH₂CH₂OH, -CH₂CH(CH₃)OH und CH(CH₃)CH₂OH, wobei - CH₂CH₂OH besonders bevorzugt ist. Bevorzugte R¹-Gruppen sind lineare Alkylgruppen. Lineare R¹-Gruppen mit 8 bis 14 Kohlenstoffatomen sind bevorzugt.

Außerdem bevorzugt verwendbare kationische monoalkoxylierte Amintenside haben die Formel VI: 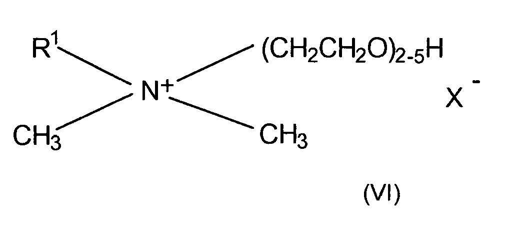 worin R1 C₁₀-C₁₈-Hydrocarbyl und Mischungen davon, besonders C₁₀-C₁₄-Alkyl, vorzugsweise C₁₀- und C₁₂-Alkyl ist und X jedes geeignete Anion zur Bereitstellung von Ladungsausgleich, vorzugsweise Chlorid oder Bromid, ist. Die Ethoxy-(CH₂CH₂O-) Einheiten (EO) der Formel II können auch durch Butoxy-, Isopropoxy[CH(CH₃)CH₂O]- und [CH₂CH(CH₃)O]-Einheiten (i-Pr) oder n- Propoxyeinheiten (Pr) oder Mischungen von EO- und/oder Pr- und/oder i-Pr- Einheiten ausgetauscht sein.

### Kationisches bisalkoxyliertes Amintensid

Das kationische bisalkoxylierte Amintensid hat vorzugsweise die allgemeine Formel VII: 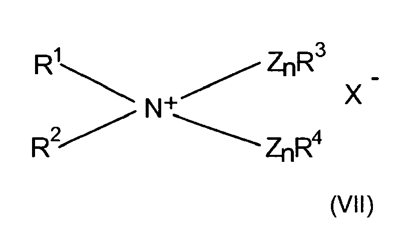 worin R¹ eine Alkyl- oder Alkenyleinheit mit 8 bis 18 Kohlenstoffatomen, vorzugsweise 10 bis 16 Kohlenstoffatomen, am meisten bevorzugt 10 bis 14 Kohlenstoffatomen ist; R² eine Alkylgruppe mit einem bis drei Kohlenstoffatomen, vorzugsweise Methyl ist; R³ und R⁴ unabhängig variieren können und aus Wasserstoff (bevorzugt), Methyl und Ethyl ausgewählt sind, X- ein Anion, wie Chlorid, Bromid, Methylsulfat, Sulfat oder dergleichen ist, das ausreicht, um elektrische Neutralität bereitzustellen. Z können unabhängig voneinander variieren und sind jeweils aus C₁-C₄-Alkoxy, besonders Ethoxy (d. h. -CH₂CH₂O-), Propoxy, Butoxy und Mischungen davon; n ist gleich oder unterschiedlich voneinander 1 bis 30, vorzugsweise 1 bis 4, und am meisten bevorzugt 1.

Bevorzugte kationische bisalkoxylierte Amintenside besitzen die Formel VIII: 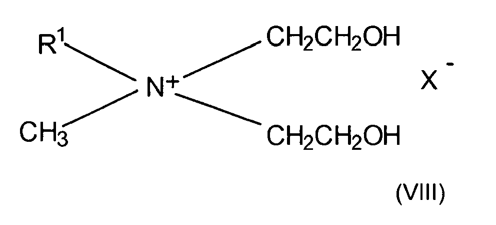 worin R¹ C₁₀-C₁₈-Hydrocarbyl und Mischungen davon, vorzugsweise C₁₀-, C₁₂-, C₁₄-Alkyl und Mischungen davon sind. X ist jedes geeignete Anion, um Ladungsausgleich bereitzustellen, vorzugsweise Chlorid. Mit Bezugnahme auf die vorstehend angegebene allgemeine Struktur des kationischen bisalkoxylierten Amins, da in einer bevorzugten Verbindung R¹ von (Kokosnuss)-C12-C14- Alkylfettsäuren abgeleitet ist.

Weitere geeignete kationische bisalkoxylierte Amintenside umfassen Verbindungen der Formel IX: 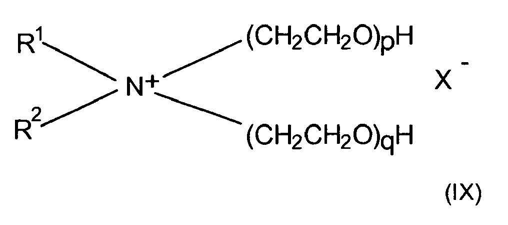 worin R¹ C₁₀-C₁₈-Hydrocarbyl, vorzugsweise C₁₀-C₁₄-Alkyl ist, unabhängig p 1 bis 3 und q 1 bis 3 ist, R² ist C₁-C₃- Alkyl, vorzugsweise Methyl und X ist ein Anion, vorzugsweise Chlorid oder Bromid.

Andere Verbindungen des vorstehenden Typs umfassen diejenigen, in denen die Ethoxy-(CH₂CH₂O-)Einheiten (EO) durch Butoxy-(Bu), Isopropoxy-[CH(CH₃)CH₂O]- und [CH₂CH(CH₃O]-Einheiten (i-Pr) oder n- Propoxyeinheiten (Pr) oder Mischungen von EO- und/oder Pr- und/oder i-Pr- Einheiten sind.

Das kationische Tensid kann besonders bevorzugt ausgewählt sein aus der Gruppe umfassend Esterquats, vorzugsweise Di-(talgfettsäureamidoethyl)methylpolyethoxyammonium-methosulfat, Diamidoaminquats, Alkyloxyalkylquats, vorzusgweise Cocopentaethoxymethylammoniummethosulfat und/oder Trialkylquats, vorzugsweise Cetyltrimethylammoniumchlorid.

### Nichtionisches Tensid

Im Wesentlichen alle nichtionischen Tenside sind hierin geeignet. Die ethoxylierten und propoxylierten nichtionischen Tenside sind bevorzugt.

Bevorzugte alkoxylierte Tenside können aus den Klassen der nichtionischen Kondensate von Alkylphenolen, nichtionischen ethoxylierten Alkoholen, nichtionischen ethoxylierten/propoxylierten Fettalkoholen, nichtionischen Ethoxylat- /Propoxylatkondensaten mit Propylenglykol und den nichtionischen Ethoxylatkondensationsprodukten mit Propylenoxid/Ethylendiaminadditionsprodukten ausgewählt werden.

### Nichtionisches Tensid aus alkoxyliertem Alkohol

Die Kondensationsprodukte von aliphatischen Alkoholen mit 1 bis 25 Mol Alkylenoxid, besonders Ethylenoxid, Propylenoxid, Butylenoxid, Dodecenoxid oder Styroloxid sind ebenfalls erfindungsgemäß verwendbar. Die Alkylkette des aliphatischen Alkohols kann entweder gerade oder verzweigt, primär oder sekundär sein und enthält generell von 6 bis 22 Kohlenstoffatome. Besonders bevorzugt sind die Kondensationsprodukte von Alkoholen, die eine Alkylgruppe mit 8 bis 20 Kohlenstoffatomen besitzen, mit 2 bis 10 Mol Ethylenoxid pro Mol Alkohol.

### Nichtionisches Polyhydroxyfettsäureamidtensid

Polyhydroxyfettsäureamide, die geeignet sind, sind diejenigen mit der Strukturformel R²CONR¹Z, worin: R¹ H, C₁-C₄- Hydrocarbyl, 2-Hydroxyethyl, 2-Hydroxypropyl Ethoxy, Propoxy oder eine Mischung davon ist, vorzugsweise C₁-C₄-Alkyl, mehr bevorzugt C₁ oder C₂-Alkyl, am meisten bevorzugt C₁-Alkyl (d. h. Methyl); und R² ein C₅-C₃₁ -Hydrocarbyl ist, vorzugsweise ein geradkettiges C₅-C₁₉-Alkyl oder -Alkenyl, mehr bevorzugt ein geradkettiges C₉-C₁₇-Alkyl oder -Alkenyl, am meisten bevorzugt ein geradkettiges C₁₁-C₁₇-Alkyl oder - Alkenyl, oder eine Mischung davon; und Z ein Polyhydroxyhydrocarbyl mit einer linearen Hydrocarbylkette, bei der mindestens 3 Hydroxylgruppen direkt an die Kette gebunden sind, oder ein alkoxyliertes Derivat (vorzugsweise ethoxyliert oder propoxyliert) davon ist. Z wird vorzugsweise in einer reduktive Aminierung von einem reduzierenden Zucker abgeleitet; mehr bevorzugt ist Z ein Glycidyl.

### Nichtionisches Fettsäureamidtensid

Geeignete Fettsäureamidtenside umfassen diejenigen mit der Formel: R⁶CON(R⁷)₂ wobei R⁶ eine Alkylgruppe mit 7 bis 21, bevorzugt 9 bis 17 Kohlenstoffatomen ist und jedes R⁷ aus der Gruppe bestehend aus Wasserstoff, C₁-C₄ Alkyl, C₁-C₄ Hydroxyalkyl und -(C₂H₄O)ₓH ausgewählt ist, wobei x im Bereich von 1 bis 3 liegt.

### Nichtionisches Alkylpolysaccharidtensid

Geeignete Alkylpolysaccharide zum diesbezüglichen Gebrauch sind in US-Patent 4,565,647, offenbart, mit einer hydrophoben Gruppe, die 6 bis 30 Kohlenstoffatome enthält, und einer hydrophilen Polysaccharid-, z. B. einer Polyglycosidgruppe, die 1, 3 bis 10 Saccharideinheiten enthält.

Bevorzugte Alkylpolyglycoside haben die Formel: R²O(CₙH₂ₙO)ₜ(glycosyl)ₓ worin R²ausgewählt ist aus der Gruppe, bestehend aus Alkyl, Alkylphenyl, Hydroxyalkyl, Hydroxyalkylphenyl und Mischungen davon, in denen die Alkylgruppen von 10 bis 18 Kohlenstoffatome enthalten; n 2 oder 3 ist; t von 0 bis 10 ist und x von 1,3 bis 8 ist. Das Glycosyl ist vorzugsweise von Glucose abgeleitet.

Das nichtionische Tensid kann besonders bevorzugt vorzugsweise ausgewählt sein aus der Gruppe umfassend Alkoholethoxylate, Fettalkoholpolyglykolether, Fettsäureethoxylate, Fettsäurepolyglykolester, Glyceridmonoalkoxylate, Alkanolamide, Fettsäurealkylolamide, ethoxylierte Alkanolamide, Fettsäurealkylolamido-ethoxylate, Imidazoline, Ethylenoxid-Propylenoxid-Blockcopolymere, Alkylphenolethoxylate, Alkylglucoside, ethoxylierte Sorbitanester und/oder Aminalkoxylate.

### Amphoteres Tensid

Geeignet verwendbare amphotere Tenside umfassen die Aminoxidtenside und die Alkylamphocarbonsäuren.

Geeignete Aminoxide umfassen jene Verbindungen mit der Formel R³(OR⁴)ₓNO(R⁵)₂, worin R³ aus einer Alkyl-, Hydroxyalkyl-, Acylamidopropyl-; und Alkylphenylgruppe oder Mischungen davon mit 8 bis 26 Kohlenstoffatomen ausgewählt ist; R⁴ eine Alkylen- oder Hydroxyalkylengruppe mit 2 bis 3 Kohlenstoffatomen oder Mischungen davon ist; x von 0 bis 5, vorzugsweise von 0 bis 3 ist; und jedes R⁵ eine Alkyl- oder Hydroxyalkylgruppe mit 1 bis 3 oder eine Polyethylenoxidgruppe mit 1 bis 3 Ethylenoxidgruppen ist. Bevorzugt sind C₁₀- C₁₈- Alkyldimethylaminoxid und C₁₀- C₁₈-Acylamidoalkyldimethylaminoxid.

Weitere geeignete amphotere Tenside können weitgehend als Derivate sekundärer und tertiärer Amine, Derivate heterocyclischer sekundärer und tertiärer Amine oder Derivate quartärer Ammonium-, quartärer Phosphonium- oder tertiärer Sulfoniumverbindungen beschrieben werden. Betain- und Sultaintenside sind bevorzugte amphotere Tenside.

Geeignete Betaine sind jene Verbindungen mit der Formel R(R')₂N+ R²COO-, worin R eine C₆-C₁₈-Hydrocarbylgruppe ist, jedes R¹ in der Regel C₁-C₃-Alkyl ist und R² eine C₁-C₅-Hydrocarbylgruppe ist. Bevorzugte Betaine sind C₁₂-C₁₈- Dimethylammoniohexanoat und die C₁₀-C₁₈-Acylamidopropan-(oder -ethan-)dimethyl-(oder diethyl-)betaine. Komplexe Betaintenside sind ebenfalls erfindungsgemäß geeignet.

Das amphotere Tensid kann besonders bevorzugt ausgewählt sein aus der Gruppe umfassend Amphoacetate, Amphodiacetate, Glycinate, Amphopropionate, Sultaine, Aminoxide und/oder Betaine.

Ein weiterer Gegenstand der vorliegenden Erfindung betrifft eine Polyurethanheißweichschaumstabilisatorabmischung enthaltend Amin, Polyol und/oder Wasser, wobei die Polyurethanheißweichschaumstabilisatorabmischung mindestens 40 Gew.-% erfindungsgemäße Polyurethanheißweichschaumstabilisatorlösung, bezogen auf das Gesamtgewicht der Polyurethanheißweichschaumstabilisatorabmischung, aufweist.

Sowohl die erfindungsgemäße Polyurethanheißweichschaumstabilisatorlösung und/oder die erfindungsgemäße Polyurethanheißweichschaumstabilisatorabmischung kann zur Herstellung von Polyurethanheißweichschaum verwendet werden.

Beispielsweise kann die erfindungsgemäße Polyurethanheißweichschaumstabilisatorlösung direkt, d.h. ohne weitere Zusätze, bei der Herstellung von Polyurethanheißweichschäumen verwendet werden.

Unter Polyurethanschaum versteht man allgemein aufgeschäumte polymere Werkstoffe, die sich bilden, wenn polyfunktionelle Isocyanate mit Polyolen reagieren. Das gebildete verknüpfende Strukturelement ist dabei die Urethangruppierung. Als Treibmittel kann Wasser eingesetzt werden. Hierbei wird Kohlendioxid und das korrespondierende Amin gebildet, welches mit weiterem Isocyanat zu einer Harnstoffgruppe reagiert. Der Polyurethanschaum kann dabei auch mehrheitlich durch Harnstoffgruppen neben Urethangruppen aufgebaut werden. Der erfindungsgemäße Polyurethanheißweichschaumstoff ist vorzugsweise ein auf Polyetherpolyolen basierender Weichschaum. Ferner kann der erfindungsgemäße Polyurethanheißweichschaumstoff als Blockschaum oder als Formschaum ausgestaltet sein.

Polyurethanheißweichschaumstoff weist bei Druckbeanspruchung einen relativ geringen Verformungswiderstand auf (DIN 7726).

Typische Werte für die Druckspannung bei 40%iger Kompression eines Polyurethanheißweichschaumstoffs liegen zwischen 1 kPa und 10 kPa (Durchführung gemäß DIN EN ISO3386-1/2).

Die Zellstruktur des Polyurethanheißweichschaumstoffs ist dabei größtenteils offenzellig.

Die Dichte des erfindungsgemäßen Polyurethanheißweichschaums liegt vorzugsweise in einem Bereich von 5 bis 80 kg/m², insbesondere in einem Bereich von 7 bis 50 kg/m², ganz besonders bevorzugt in einem Bereich von 10 bis 30 kg/m² (gemessen nach DIN EN ISO 845, DIN EN ISO 823).

Die Polyurethanheißweichschäume können aus der Reaktion von Polyolen mit Isocyanaten unter Verwendung einer erfindungsgemäßen Polyurethanheißweichschaumstabilisatorlösung und/oder weiterer Komponenten erhalten werden.

Mittels der erfindungsgemäßen Polyurethanheißweichschaumstabilisatorlösung können Polyurethanheißweichschäume beispielsweise mit einer Porengrößenverteilung im Bereich von 5 bis 25 Zellen/cm hergestellt werden.

Als chemisches Treibmittel zur Herstellung der Polyurethanheißweichschaumstoffe kann bevorzugt Wasser eingesetzt werden, das mit den Isocyanatgruppen unter Freisetzung von Kohlendioxid reagiert. Bevorzugt wird Wasser in einer Menge von 0,2 bis 6 Gew.-Teilen (alle Gewichtsteile bezogen auf 100 Gewichtsteile Polyol), insbesondere bevorzugt in einer Menge von 1,5 bis 5,0 Gew.-Teilen verwendet. Gemeinsam mit oder an Stelle von Wasser können auch physikalisch wirkende Treibmittel, beispielsweise Kohlendioxid, Aceton, Kohlenwasserstoffe, wie n-, iso- oder Cyclopentan, Cyclohexan oder halogenierte Kohlenwasserstoffe, wie Methylenchlorid, Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 bis 15 Gew.-Teilen, insbesondere 1 bis 10 Gew.-Teilen, die Menge an Wasser vorzugsweise im Bereich zwischen 0,5 bis 10 Gew.-Teilen, insbesondere 1 bis 5 Gew.-Teilen. Kohlendioxid wird von den physikalischen Treibmittel bevorzugt, welches bevorzugt in Kombination mit Wasser als chemischem Treibmittel verwendet wird.

Als Isocyanate kommen die an sich bekannten aliphatischen, cycloaliphatischen, araliphatischen und vorzugsweise aromatischen mehrwertigen Isocyanate in Frage. Besonders bevorzugt werden Isocyanate in einem Bereich von 80 bis 120 mol % relativ zu der Summe der isocyanatverbrauchenden Komponenten eingesetzt.

Im einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie beispielsweise 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden. Besonders bevorzugt werden Gemische aus Polyphenylpolymethylenpolyisocyanat mit Diphenylmethandiisocyanat, wobei vorzugsweise der Anteil an 2,4'-Diphenylmethandiisocyanat > 30 Gew.-% beträgt.

Vorteilhafterweise werden auch sogenannte modifizierte mehrwertige Isocyanate, d. h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyanat, Urethangruppen enthaltende organische, vorzugsweise aromatische Polyisocyanate mit NCO-Gehalten von 43 bis 15 Gew.-%, vorzugsweise von 31 bis 21 Gew.-%, bezogen auf das Gesamtgewicht, beispielsweise Umsetzungsprodukte mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, wobei diese als Di- bzw. Polyoxyalkylenglykole einzeln oder als Gemische eingesetzt werden können. Beispielsweise genannt seien: Diethylen-, Dipropylenglykol, Polyoxyethylen-, Polyoxypropylen- und Polyoxypropylenpolyoxyethenglykole, - triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'-und 4,4'-Diphenylmethandiisocyanat, 2,4- und/oder 2,6-Toluylendiisocyanaten oder Roh-MDI. Bewährt haben sich ferner flüssige, Carbodiimidgruppen und/oder Isocyanuratringe enthaltende Polyisocyanate mit NCO-Gehalten von 43 bis 15, vorzugsweise 31 bis 21, Gew.-%, bezogen auf das Gesamtgewicht, beispielsweise auf Basis von 4,4'-, 2,4'- und/oder 2,2'-Diphenylmethandiisocyanat und/oder 2,4- und/oder 2,6-Toluylendiisocyanat.

Die modifizierten Polyisocyanate können miteinander oder mit unmodifizierten organischen Polyisocyanaten, wie beispielsweise 2,4'-, 4,4'-Diphenylmethandiisocyanat, Roh-MDI, 2,4-und/oder 2,6-Toluylendiisocyanat, gemischt werden.

Besonders bewährt haben sich als organische Polyisocyanate und kommen daher vorzugsweise zur Anwendung: Toluylendiisocyanat, Gemische aus Diphenylmethandiisocyanat-Isomeren, Gemische aus Diphenylmethandiisocyanat und Polyphenylpolymethylpolyisocyanat oder Toluoldiisocyanat mit Diphenylmethandiisocyanat und/oder Polyphenylpolymethylpolyisocyanat oder sogenannte Prepolymere. Besonders bevorzugt wird im erfindungsgemäßen Verfahren Toluylendiisocyanat eingesetzt.

In einer besonders bevorzugten Ausführungsvariante werden als organische und/oder modifizierte organische Polyisocyanate Gemische von 2,4-Toluylendiisocyanat mit 2,6-Toluylendiisocyanat mit einem Anteil an 2,4-Toluylendiisocyanat von 80 Gew.-% eingesetzt.

Als Polyole eignen sich solche mit mindestens zwei gegenüber Isocyanatgruppen reaktiven H-Atomen; vorzugsweise werden Polyetherpolyole eingesetzt. Solche Polyetherpolyole können nach bekannten Verfahren, hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 3 reaktive Wasserstoffatome gebunden enthält oder durch kationische Polymerisation von Alkylenoxiden in Gegenwart von Lewis-Säuren wie beispielsweise Antimonpentachlorid oder Borfluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und/oder 1,2-Propylenoxid eingesetzt. Die Alkylenoxide können einzeln, alternierend nacheinander oder als Mischungen verwendet werden. Als Startermolekül kommen Wasser oder 2- und 3-wertige Alkohole in Betracht, wie Ethylenglykol, Propandiol-1,2 und -1,3, Diethylenglykol, Dipropylenglykol, Glycerin, Trimethylolpropan usw. Auch polyfunktionelle Polyole, wie Zucker, können als Starter eingesetzt werden.

Die Polyetherpolyole, vorzugsweise Polyoxypropylen-polyoxyethylen-polyole, besitzen eine Funktionalität von 2 bis 5 und zahlengemittelte Molekulargewichte im Bereich von 500 bis 8000, vorzugsweise 800 bis 3500.

Gegebenenfalls werden den Ausgangsmaterialien auch Flammschutzmittel zugesetzt, bevorzugt solche, die flüssig und/oder in einer oder mehreren der zur Schaumherstellung eingesetzten Komponenten löslich sind. Bevorzugt kommen handelsübliche phosphorhaltige Flammschutzmittel zum Einsatz, beispielsweise Trikresylphosphat, Tris(2-chlorethyl)-phosphat, Tris(2-chlorpropyl)phosphat, Tris(2,3-dibrompropyl)phosphat, Tris- (1,3-dichlorpropyl)phosphat, Tetrakis(2-chlorethyl)ethylendiphosphat, Trisbutoxyethylphosphat, Dimethylmethanphosphonat, Diethylethanphosphonat, Diethanolaminomethylphosphonsäurediethylester. Ebenfalls geeignet sind halogen- und/oder phosphorhaltige, flammschützend wirkende Polyole und/oder Melamin. Des Weiteren kann auch Melamin eingesetzt werden. Die Flammschutzmittel werden bevorzugt in einer Menge von maximal 35 Gew.-%, bevorzugt maximal 20 Gew.-%, bezogen auf die Polyolkomponente, eingesetzt. Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Farbstoffen sowie fungistatisch und bakteriostatisch wirksamen Substanzen sowie Einzelheiten über Verwendungs- und Wirkungsweise dieser Zusatzmittel sind in G. Oertel (Hrsg.): "Kunststoff-Handbuch", Band VII, Carl Hanser Verlag, 3. Auflage, München 1993, S. 110-123 beschrieben.

Weiterhin können in dem erfindungsgemäßen Verfahren bevorzugt 0,05 bis 0,5 Gew.-Teile, insbesondere 0,1 bis 0,2 Gew.-Teile Katalysatoren für die Treibreaktion eingesetzt werden. Diese Katalysatoren für die Treibreaktion sind ausgewählt aus der Gruppe der tertiären Amine [Triethylendiamin, Triethylamin, Tetramethylbutandiamin, Dimethylcyclohexylamin, Bis(2-dimethylaminoethyl)ether, Dimethylaminoethoxyethanol, Bis(3-dimethylaminopropyl)amin, N,N,N'-Trimethylaminoethylethanolamin, 1,2-Dimethylimidazol, N(3-Aminopropyl)imidazol, 1-Methylimidazol, N,N,N',N'-Tetramethyl-4,4'-diaminodicyclohexylmethan, N,N-Dimethylethanolamin,N,N-Diethylethanolamin, 1,8-Diazabicyclo-5,4,0-undecen, N,N,N',N'-Tetramethyl-1,3-propandiamin, N,N-Dimethylcyclohexylamin, N,N,N',N",N"'-Pentamethyldiethylentriamin, N,N,N',N",N"'-Pentamethyldipropylentriamin, N,N'-Dimethylpiperazin, N-Methylmorpholin, N-Ethylmorpholin, 2,2'-Dimorpholinodiethylether, N,N-Dimethylbenzylamin, N,N',N"-Tris(dimethylaminopropyl)hexahydrotriazin, N,N,N',N'-Tetramethyl-1,6-hexandiamin, Tris(3-dimethylaminopropyl)amin, und/oder Tetramethylpropanamin]. Ebenfalls geeignet sind säureblockierten Derivate der tertiären Amine. In einer besonderen Ausführungsform wird als Amin Dimethylethanolamin oder Bis(2-dimethylaminoethyl)ether eingesetzt. In einer weiteren Ausführungsform wird als Amin Triethylendiamin verwendet.

Auch können in dem erfindungsgemäßen Verfahren bevorzugt 0,05 bis 0,5 Gew.-Teile, insbesondere 0,1 bis 0,3 Gew.-Teile Katalysatoren für die Gelreaktion eingesetzt werden. Die Katalysatoren für die Gelreaktion sind ausgewählt aus der Gruppe der metallorganischen Verbindungen und der Metallsalze folgender Metalle: Zinn, Zink, Wolfram, Eisen, Wismut, Titan. In einer besonderen Ausführungsform werden Katalysatoren aus der Gruppe der Zinncarboxylate verwendet. Ganz besonders bevorzugt sind dabei Zinn(2-ethyl-hexanoat) und Zinnricinoleat. Insbesondere Zinn-2-ethylhexanoat ist für die erfindungsgemäße Herstellung eines Polyurethanheißweichschaums von Bedeutung. Des Weiteren sind auch Zinnverbindungen mit vollständig oder teilweise kovalent angebundenen organischen Resten bevorzugt. Besonders bevorzugt wird dabei Dibutylzinndilaurat eingesetzt.

Eine grundsätzliche Übersicht findet sich G. Oertel (Hrsg.): "Kunststoff-Handbuch", Band VII, Carl Hanser Verlag, 3. Auflage, München 1993, S. 139-192 und in D. Randall und S. Lee (beide Hrsg.): "The Polyurethanes Book" J. Wiley, 1. Auflage, 2002.

In einer weiteren Anwendung kann die erfindungsgemäße niedrigviskose, wässrige Polyurethanheißweichschaumstabilisatorlösung für Niederdruckmaschinen verwendet werden. Die Zuführung der niedrigviskosen, wässrigen Polyurethanheißweichschaumstabilisatorlösung kann dabei separat in die Mischkammer erfolgen. In einer weiteren Verfahrensvariante kann die erfindungsgemäße niedrigviskose, wässrige Polyurethanheißweichschaumstabilisatorlösung auch schon vor der Mischkammer einer der danach in die Mischkammer gelangenden Komponenten zugemischt werden. Die Zumischung kann auch im Rohstofftank erfolgen.

In einer weiteren Anwendung kann die erfindungsgemäße niedrigviskose, wässrige Polyuretharheißweichschaumstabilisatorlösung auch auf Hochdruckmaschinen eingesetzt werden. Die Zugabe der niedrigviskosen, wässrigen Polyurethanheißweichschaumstabilisatorlösung kann dabei direkt in den Mischkopf erfolgen.

In einer weiteren Verfahrensvariante kann die erfindungsgemäße niedrigviskose, wässrige Polyurethanheißweichschaumstabilisatorlösung auch schon vor der Mischkammer einer der danach in die Mischkammer gelangenden Komponenten zugemischt werden. Die Zumischung kann auch im Rohstofftank erfolgen.

Die Anlage zur Herstellung des Polyurethanheißweichschaums kann dabei in kontinuierlicher oder auch in diskontinuierlicher Weise betrieben werden. Besonders vorteilhaft ist die Verwendung der erfindungsgemäßen niedrigviskosen, wässrigen Polyurethanheißweichschaumstabilisatorlösung für die kontinuierliche Verschäumung. Dabei kann der Schäumungsprozess sowohl in horizontaler als auch in vertikaler Richtung erfolgen. In einer weiteren Ausführung kann die erfindungsgemäße niedrigviskose, wässrige Polyurethanheißweichschaumstabilisatorlösung für die CO₂-Technologie benutzt werden.

In einer weiteren Ausführungsform kann die Verschäumung auch in Formen erfolgen. Die Gasdurchlässigkeit des erfindungsgemäßen Polyurethanheißweichschaums liegt vorzugsweise in einem Bereich von 1 bis 300 mm Ethanolsäule, insbesondere in einem Bereich von 7 bis 25 mm Ethanolsäule (gemessen durch Messung der Druckdifferenz bei der Durchströmung einer Schaumprobe. Hierfür wird eine 5 cm dicke Schaumscheibe auf eine glatte Unterlage gelegt. Eine 800 g schwere Platte (10 cm x 10 cm) mit zentraler Bohrung (Durchmesser 2 cm) und einem Schlauchanschluß wird auf der Schaumprobe platziert. Über die zentrale Bohrung wird ein konstanter Luftstrom von 8 l/min in die Schaumprobe geleitet. Die auftretende Druckdifferenz (relativ zu ungehindertem Ausströmen) wird mittels einer Ethanolsäule in einem graduierten Druckmesser ermittelt. Je geschlossener der Schaum ist, desto mehr Druck wird aufgebaut und desto mehr wird der Spiegel der Ethanolsäule nach unten gedrückt und desto größere Werte werden gemessen.

Noch ein Gegenstand der vorliegenden Erfindung betrifft ein Erzeugnis enthaltend einen Polyurethanheißweichschaum der unter Verwendung einer erfindungsgemäßen Polyurethanheißweichschaumstabilisatorlösung und/oder einer Polyurethanheißweichschaumstabilisatorabmischung hergestellt wurde.

Der Gegenstand der vorliegenden Erfindung wird anhand der nachstehenden Beispiele und Tabellen weiter erläutert. Hierbei wurde ein typisches Polyethersiloxan für die Stabilisierung von Polyurethanheißweichschäumen hergestellt und hinsichtlich seiner verschiedenen Abmischungen charakterisiert.

### Polyethersiloxan A

Bei dem Polyethersiloxan A handelt es sich um ein erfindungsgemäßes Polyethersiloxan gemäß der nachstehenden Formel: 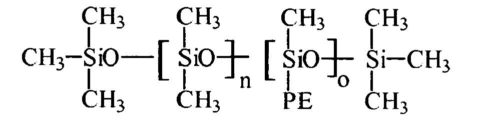 worin, o = 4, n = 70, PE = Polyether = Mischung aus zwei Polyethern: 37,5 val% eines methylierten Polyethers mit Mn = 3800 g/mol, hergestellt aus 58 Gew.-% Propylenoxid und 42 Gew.-% Ethylenoxid und 62,5 val% eines methylierten Polyethers mit Mn = 600 g/mol, hergestellt aus 100 Gew.-% Ethylenoxid.

### Herstellung des Polyethersiloxans A:

Die Herstellung des Polyethersiloxans erfolgt aus dem entsprechenden seitständig Si-H-funktionellen Polydimethylsiloxan und dem (oder den) korrespondierenden Allylpolyethern. Dabei erfolgt die Herstellung des Siloxans gemäß den bekannten Verfahren, beispielsweise beschrieben in EP 0499200, durch Äquilibrierung. Der Allylpolyether wird durch Alkoxylierung von Alkylenoxiden wie Ethylenoxid, Propylenoxid, Dodecenoxid oder Styroloxid an Allylalkohol als Starter in einer anionischen Polymerisation erhalten. Beispiele für die Synthesemöglichkeiten derartiger Allylpolyether sind in EP 0822218 offenbart. Für die Hydrosilylierung werden 30 Gew.-% Überschuss des (oder der) Allylpolyethers über die stöchiometrisch nötige Menge zugegeben. Ein üblicher Platinkatalysator für die Hydrosilylierungsreaktion wie cis-Pt oder Hexachloroplatinsäure wird in einer Menge von 10 ppm zugeführt. Die Reaktionsmischung wird für die Reaktion 6 h auf 90°C erhitzt, wobei der Restgehalt an SiH-Funktionen in Intervallen durch volumimetrische Umsetzung mit Kaliumbutylatlösung und Bestimmung des gebildeten Wasserstoffs ermittelt wird. Die Reaktion ist beendet, wenn > 98 % der eingesetzten Si-H-Funktionen abreagiert sind. Der im Reaktionsprodukt enthaltene Überschusspolyether verbleibt im Reaktionsgemisch. Das so erhaltene Produkt wird direkt als Polyethersiloxan A für die weiteren Tests eingesetzt. Die Herstellung solcher Si-C-verknüpften Polyethersiloxane ist in der Literatur schon oft beschrieben worden, beispielsweise in US 4,147,847, EP 0493836 und US 4,855,379, auf die hier im vollem Umfang Bezug genommen werden.

### Abmischung des Polyethersiloxans A

Zur Darlegung der Erfindung wurde exemplarisch das oben genannte Polyethersiloxan mit verschiedenen organischen Lösungsmitteln, mit Wasser bzw. Wasser mit Tensiden abgemischt Von den Proben wurde jeweils die Viskosität gemessen.

### Abmischung des Polyethersiloxans A mit Wasser:

In einer Mischungsreihe wurde das Polyethersiloxan A in 10 Gew.-%- Schritten mit Wasser gemischt und die Viskositäten bestimmt.

**Tabelle I**

| | | |
|---|---|---|
| Gemisch aus Polyethersiloxan A und Wasser | | |

| Gehalt Polyethersiloxan A | Gehalt Wasser | Viskosität (bei 1 s⁻¹) |
|---|---|---|
| [Gew.-%] | [Gew.-%] | [Pa·s] |
| 90 | 10 | 11,5 |
| 80 | 20 | 10,0 |
| 70 | 30 | 46,4 |
| 60 | 40 | 113 |
| 50 | 50 | 34,5 |
| 40 | 60 | 6,1 |
| 30 | 70 | 2,0 |
| 20 | 80 | 0,6 |
| 10 | 90 | 0,08 |

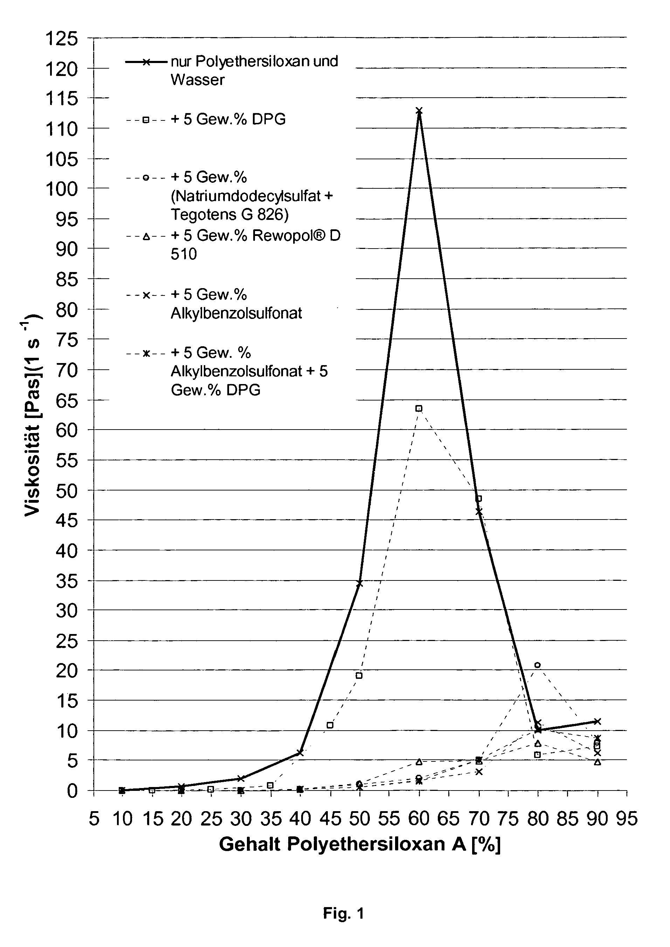

Es zeigt sich, dass der Verlauf der Viskosität zwischen dem reinen Wasser und dem reinen Polyethersiloxan keineswegs linear ist. Stattdessen kommt es beginnend bei 30 Gew.-% Polyethersiloxan in der Mischung mit Wasser zu einem sehr signifikanten Anstieg der Viskosität. Das Maximum wird bei etwa 60 Gew.-% Polyethersiloxan in der Mischung mit Wasser erreicht. Dabei können Werte bis über 100 Pa·s auftreten. Derartig hohe Viskositäten bedingen ein gelartiges Verhalten. Bei weiterer Erhöhung des Anteils an Polyethersiloxan sinkt die Viskosität dann wieder ab. Bei ca. 80 Gew.-% ist der Bereich der drastischen Viskositätserhöhung beendet. Die Viskosität fällt dann in Richtung des reinen Polyethersiloxans ab. Eine graphische Darstellung der Viskositätswerte ist in Fig. 1 angefügt. Es ist offensichtlich, dass die Herstellung gebrauchsfertiger niederviskoser Polyurethanheißweichschaumstabilisatorlösungen - Viskosität ≤ 5000 mPa·s - mit Wasser als Lösungsmittel ohne weitere Zusätze im Bereich von 40 Gew.-% bis 80 Gew.-% Polyethersiloxan in der Mischung nicht möglich ist.

Zugabe verschiedener Zusätze zu den aus Polyethersiloxan und Wasser hergestellten Mischungen:

Zu den vorgehend hergestellten Abmischungen aus Polyethersiloxan und Wasser wurden dann verschiede Zusätze gegeben. Die Gewichtsgehalte der Zusätze in Gew.-%, bezogen auf die Polyethersiloxan/Wasser-Mischung (100 Gew.-%), wurden eingewogen und der Mischung hinzugegeben. Die absoluten Gehalte an Polyethersiloxan und Wasser in der Mischung inklusiv Tensid erniedrigen sich dadurch um den entsprechenden Faktor, wobei das Verhältnis zwischen Polyethersiloxan und Wasser aber gewahrt bleibt (was für das Phasenverhalten sehr wichtig ist). Dabei wurde zunächst versucht, durch Zugabe eines üblichen organischen Lösungsmittels für Polyethersiloxane eine angestrebte niedrigviskose Lösung von den beiden Polyethersiloxanen in Wasser zu erreichen. Als Lösungsmittel wurde dabei Dipropylenglykol (DPG) verwendet. DPG ist das übliche Lösungsmittel für Polyurethanheißweichschaumstabilisatoren. Hierbei wurde eine Menge von 5 Gew.-% DPG den Abmischungen aus den Polyethersiloxanen und Wasser hinzugegeben.

**Tabelle II**

| Gemisch aus Polyethersiloxan A und Wasser und Zusatz von 5 Gew.-% DPG | | |
|---|---|---|
| Gehalt Polyethersiloxan A | Gehalt Wasser | Viskosität (bei 1 s⁻¹) |
| [Gew.-%] | [Gew.-%] | [Pa·s] |
| 90 | 10 | 7,4 |
| 80 | 20 | 5,9 |
| 70 | 30 | 48,5 |
| 60 | 40 | 63,5 |
| 50 | 50 | 19,1 |
| 45 | 55 | 10,7 |
| 30 | 70 | 0,8 |
| 20 | 80 | 0,1 |
| 10 | 90 | 0,02 |

Es zeigt sich, dass die Zugabe von 5 Gew.-% DPG, zwar die Viskosität etwas absenkt, aber immer noch ein drastischer Anstieg der Viskosität beobachtet wird. Auch die Zugabe höherer Mengen an DPG ändert daran nichts, wie sich aus den Vergleichsbeispielen in Tabelle III entnehmen lässt. Neben dem DPG wurde hier als Lösungsmittel auch ein flüssiger Polyether (fPE) eingesetzt. Bei diesem handelt es sich um einen flüssigen, mit n-Butanol gestarteten Polyether mit statistisch verteiltem Einbau von Ethylenoxid und Propylenoxid mit einer mittleren Molmasse von ca. 1000 g/mol. Dabei sind 42 Gew.-% Propylenoxid und 58 Gew.-% Ethylenoxid. Die Herstellung dieses Polyethers erfolgt analog zu den oben beschriebenen allylfunktionellen Polyethern durch Alkoxylierung.

**Tabelle III**

| Gemisch aus Polyethersiloxan A und verschiedenen Lösungsmitteln in höherer Konzentrati on | | | | |
|---|---|---|---|---|
| Gehalt Polyethersiloxan A [Gew.-%] | Gehalt Wasser [Gew.-%] | Zusatz Art | Zusatz Menge [Gew.-%] | Viskosität (bei 1 s⁻¹) [Pa·s] |
| 60 | 40 | - | - | 113 |
| 60 | 40 | DPG | 20 | 11,1 |
| 60 | 40 | flüssiger Polyether (fPE) | 20 | 10,5 |

Zwar fällt der Anstieg der Viskosität moderater aus, aber es wird immer noch eine Viskosität über 5 Pa·s beobachtet, was derartige Abmischungen für eine technische Anwendung als Polyurethanstabilisator nicht in Frage kommen lässt.

Im Gegensatz zu den oben erwähnten Lösungsmitteln sind in den folgenden Abmischungen des Polyethersiloxans A mit Wasser Tenside oder Tensidmischungen zugesetzt worden. Bei den Tensiden sind teilweise Abmischungen mit Wasser technisch üblich. In solchen Fällen wurde beim Ansetzen der Probe auf den Zusatz von 5 Gew.-% reinem Tensid abgezielt d.h. bei verdünnten Tensiden wurde entsprechend mehr von der Tensidabmischung eingesetzt. Das in der Tensidabmischung teilweise enthaltene Wasser wurde für den Gesamtwassergehalt des Polyethersiloxan/Wasser/Tensid-Gemisches berücksichtigt.

Zunächst wurde ein 2-Ethylhexylsulfonat-Na Salz mit dem Handelsnamen Rewopol® D 510, erhältlich bei Firma Degussa, verwendet. Rewopol® D 510 selbst ist ein 40 Gew.-% Abmischung mit 60 Gew.-% Wasser.

**Tabelle IV**

| Gemisch aus Polyethersiloxan A und Wasser und Zusatz von 5 Gew.-% 2-Ethylhexylsulfonat-Na | | |
|---|---|---|
| Gehalt Polyethersiloxan A [Gew.-%] | Gehalt Wasser [Gew.-%] | Viskosität (bei 1 s⁻¹) [Pa·s] |
| 90 | 10 | 4,8 |
| 80 | 20 | 7,9 |
| 70 | 30 | 4,9 |
| 60 | 40 | 4,8 |
| 50 | 50 | 1,1 |
| 40 | 60 | 0,14 |
| 30 | 70 | 0,04 |
| 20 | 80 | 0,04 |
| 10 | 90 | 0,004 |

Es zeigt sich, dass durch Zugabe von 5 Gew.-% des Tensids 2-Ethylhexylsulfonat-Na bei dem Polyethersiloxan A im erfindungsgemäßen Bereich durchgängig eine akzeptable, niedrige Viskosität erhalten werden kann.

Als weitere Möglichkeit neben der Verwendung reiner Tenside wird eine Mischung geeigneter Tenside angesehen. Eine Mischung aus 50 Gew.-% Tegotens^{®} 826 - einem Oligoalkylglykosid - erhältlich bei Firma Degussa, und 50 Gew.-% Natriumdodecylsulfat ist dabei von besonderem Interesse.

**Tabelle V**

| Gemisch aus Polyethersiloxan A und Wasser und Zusatz von 5 Gew.-% Tensidmischung (Tensidmischung = 50 Gew. % Tegotens^{®} G 826, 50 Gew. % Natriumdodecylsulfat) | | |
|---|---|---|
| Gehalt Polyethersiloxan A [Gew.-%] | Gehalt Wasser [Gew.-%] | Viskosität (bei 1 s⁻¹) [Pa·s] |
| 90 | 10 | 7,9 |
| 80 | 20 | 20,8 |
| 70 | 30 | 5,0 |
| 60 | 40 | 1,9 |
| 50 | 50 | 1,0 |
| 40 | 60 | 0,12 |
| 30 | 70 | 0,03 |
| 20 | 80 | 0,01 |
| 10 | 90 | 0,001 |

Bei dem Polyethersiloxan A können für alle erfindungsgemäßen Abmischungen Viskositäten ≤ 5 Pa·s erhalten werden.

Im Folgenden wird ein lineares Alkylbenzolsulfonat- Natriumsalz mit einer Alkylkettenlänge von C₁₀ bis C₁₃ mit dem Handelsnamen Reworyl^{®} NKS 50, erhältlich bei Firma Degussa, verwendet. Es ist eine 50 Gew.-%ige Abmischung in Wasser.

**Tabelle VI**

| Gemisch aus Polyethersiloxan A und Wasser und Zusatz von 5 Gew.-% Alkylbenzolsulfonat, Na | | |
|---|---|---|
| Gehalt Polyethersiloxan A [Gew.-%] | Gehalt Wasser [Gew.-%] | Viskosität (bei 1 s⁻¹) [Pa·s] |
| 90 | 10 | 6,3 |
| 80 | 20 | 11,3 |
| 70 | 30 | 3,1 |
| 60 | 40 | 1,6 |
| 50 | 50 | 0,49 |
| 40 | 60 | 0,17 |
| 30 | 70 | 0,053 |
| 20 | 80 | 0,016 |
| 10 | 90 | 0,006 |

Es zeigt sich, dass das Alkylbenzolsulfonat in dem erfindungsgemäßen Bereich die Viskosität unter 5 Pa·s senkt.

Neben dem Einsatz von Tensiden kann die kombinierte Verwendung von Tensiden und organischen Lösungsmitteln sinnvoll sein. Dies kann besonders im Hinblick auf eine Verbesserung des Frostschutzes notwendig sein. Im Folgenden sind hierfür zusätzlich zu den Proben von Tabelle VI noch 5 Gew.-% DPG zugesetzt worden.

**Tabelle VII**

| Gemisch aus Polyethersiloxan A und Wasser und Zusatz von je 5 Gew.-% Alkylbenzolsulfo- nat, Na und 5 Gew.-% DPG. | | |
|---|---|---|
| Gehalt Polyethersiloxan A [Gew.-%] | Gehalt Wasser [Gew.-%] | Viskosität (bei 1 s⁻¹) [Pa·s] |
| 90 | 10 | 8,7 |
| 80 | 20 | 10,1 |
| 70 | 30 | 5,0 |
| 60 | 40 | 1,5 |
| 50 | 50 | 0,42 |
| 40 | 60 | 0,15 |
| 30 | 70 | 0,048 |
| 20 | 80 | 0,016 |
| 10 | 90 | 0,006 |

Eine deutliche Änderung des Viskositätsverlaufs im Vergleich von Tabelle VI und VII kann nicht beobachtet werden. Der Zusatz von DPG ändert an den viskositätssenkenden Eigenschaften des Zusatzes eines organischen Tensids zu einem Gemisch aus Polyethersiloxan und Wasser zunächst nicht viel, kann aber weitere Vorteile wie zum Beispiel höhere Frostsicherheit mit sich bringen.

Das Polyethersiloxan wurde des Weiteren in jeweils einer Abmischung mit DPG (nicht erfindungsgemäß) und mit Wasser und organischem Tensid (erfindungsgemäßes Beispiel) bei einer Herstellung eines Polyurethanheissweichschaums im Labor eingesetzt. Hierbei wurde jeweils folgende Abmischungen verwendet:
60 Gew.-% Polyethersiloxan
40 Gew.-% DPG
oder
60 Gew.-% Polyethersiloxan
35 Gew.-% Wasser
5 Gew.-% Alkylbenzolsulfonat, Na

Die so hergestellten Abmischungen wurden dann in einer typischen Polyurethanheißweichschaumformulierung untersucht:

Allgemeine Rezeptur für die Herstellung der Polyurethanversuchsheißweichschäume:
- 100 Gew.-Teile Polyol (Desmophen^{®} PU20WB01 der Firma Bayer, OH-Zahl 56)
- 5,0 Gew.-Teile Wasser (chemisches Treibmittel)(bei der Wasser enthaltenden Polyethersi loxanabmischung entsprechend weniger)
- 1,0 Gew.-Teile Abmischung des Polyethersiloxans
- 0,15 Gew.-Teile Aminkatalysator (Triethylendiamin)
- 0,23 Gew.-Teile Zinnkatalysator (Zinn-2-ethylhexanoat)
- 5,0 Gew.-Teile Methylenchlorid (zusätzliches physikalisches Treibmittel)
- 63,04 Gew.-Teile Isocyanat (Toluylendiisocyanat, TDI-80)(Verhältnis von Isocyanatgruppen zu isocyanatverbrauchenden reaktiven Gruppen = 1,15)

### Durchführung:

Polyol, Wasser, Katalysatoren und Stabilisator wurden in einem Pappbecher vorgelegt und mit einer Rührscheibe durchmischt (45 s mit 1000 U/min). Anschließend wurde das Methylenchlorid zugegeben und erneut 10 s mit 1000 U/min vermischt. Anschließend wurde das Isocyanat (TDI-80) zugegeben und noch einmal mit 2500 U/min für 7 s gerührt. Das Gemisch wurde dann in eine Kiste 30 cm x 30 cm x 30 cm gefüllt. Während des Aufschäumens wurde dann die Steighöhe mittels einer Ultraschallhöhenmessung gemessen. Die Steigzeit bezeichnet diejenige Zeit, die verstreicht, bis der Schaum seine maximale Steighöhe erreicht hat. Der Rückfall bezeichnet das Absacken der Schaumoberfläche nach dem Abblasen des Polyurethanheißweichschaumes. Dabei wird der Rückfall 3 min nach dem Abblasen in Relation zur maximalen Steighöhe gemessen. Das Raumgewicht wurde gemäß DIN EN ISO 845 und DIN EN ISO 823 gemessen. Die Zellzahl wurde mittels einer Lupe mit Skalierung an drei Stellen ausgezählt und die Werte gemittelt.

**Tabelle VIII**

| Ergebnisse der Polyurethanheißweichschaum-Testverschäumung | | | | | |
|---|---|---|---|---|---|
| Polyethersiloxan | Abmischung mit | Steigzeit [s] | Rückfall [cm] | Raumgewicht [kg/m³] | Zellzahl [1/cm] |
| A | DPG | 86 | -0,1 | 18,0 | 7 |
| A | Wasser + Alkylbenzolsulfonat, Na | 87 | -0,1 | 18,1 | 6 |

Es stellt sich bei den Testverschäumungen heraus, dass beide Abmischungen des Polyethersiloxans identische Eigenschaften zeigen. Ein Einfluss des Lösungsmittels kann daher bei den Testverschäumungen nicht beobachtet werden. Dennoch können in anderen Polyurethanheißweichschaumformulierungen Unterschiede im Verschäumungsverhalten von einer Abmischung von Polyethersiloxanen mit organischen Lösungsmitteln und Wasser nicht ausgeschlossen werden. Im speziellen kann das Fehlen von Dipropylenglykol auch zu offeneren Schaumstrukturen führen. Im Rahmen der relevanten Fragestellung kann eine Abmischung von Polyethersiloxanen mit einem Wasser/Tensid-Gemisch für die Verwendung als Polyurethanheißweichschaumstabilisator als brauchbar eingestuft werden.

Zuletzt ist die Fragestellung interessant, welche Tensidtypen zu der in dieser Erfindung dargelegten Viskositätserniedrigung führen können. Hierfür wurden das Polyethersiloxan mit verschiedensten Tensiden gemischt. Die jeweilige Einsatzmenge des reinen Tensids beträgt dabei 5 Gew.-% in der Gesamtmischung. Bezogen auf eine Mischung aus Polyethersiloxan und Wasser ohne Tensid ergibt sich dass in Tabelle IX aufgeführte Verhältnis. Die resultierenden Viskositäten sind in Tabelle IX und X aufgeführt.

**Tabelle IX**

| Gemisch aus den beiden Polyethersiloxanen und Wasser im Verhältnis der nachfolgenden Tensidreihenversuche | | | |
|---|---|---|---|
| Polyethersiloxan | Gehalt Polyethersiloxan | Gehalt Wasser | Viskosität (bei 1 s⁻¹) |
| | [Gew.-%] | [Gew.-%] | [Pa·s] |
| A | 52,6 | 47,4 | 45,6 |

**Tabelle X**

| Gemisch aus 50 Gew.-% Polyethersiloxan A, 45 Gew.-% Wasser und 5 Gew.-% verschiedener Tenside | | |
|---|---|---|
| **Tensid** | **Markenname** | **Viskosität [Pa·s]** |
| **Anionische Tenside** | | |
| Alkylsulfate/Fettalkoholsulfate | Rewopol^{®} NLS 28 (Dodecylsulfat, Na) | 3,4 |
| Secundäre Alkylsulfate/ Paraffinsulfonate | Hostapur^{®} SAS30 (C14/17 Alkylsulfat, Na) | 0,6 |
| Alkylbenzolsulfonate | Reworyl^{®}NKS 50 (C10/C13 Alkylbenzolsulfonat, Na) | 0,9 |
| Alkylphosphate/ Phosphoric acid mono/di/tri ester | Berol^{®} 522 (Decylphosphat, K) | 3,4 |
| Phosphonsäure ester | Hostaphat^{®} OPS (Octylphosphonsäure) | 0,4 |
| Sulfobernsteinsäurediester | Rewopol^{®} SB DO 75 (Diethylhexylsulfosuccinat, Na) | 1,4 |
| Sulfobernsteinsäuremonoester, ethoxyliert | Rewopol^{®} SB FA 30 (Laurylethoxysulfosuccinate, Na) | 1,5 |
| α-Olefinsulfonate | Hostapur^{®} OS (C14/16 α-Olefinsulfonat, Na) | 1,5 |
| Fettsäureisethionat | Hostapon^{®} SCI 85C | 3,3 |
| Fettsäure Methyltaurid | Hostapon^{®} CT | 3,9 |
| Arylsulfonate | p-Toluolsulfonsäure, Na | 0,5 |

| **Kationische Tenside** | | |
|---|---|---|
| Alkyloxyalkyl quats | Rewoquat^{®} CPEM (Coco pentaethoxy methylammonium methosulfat) | 0,9 |
| Trialkyl quats | Adogen^{®} 444-29 Cetyl trimethylammonium chloride | 1,1 |

| **Nichtionische Tenside** | | |
|---|---|---|
| Alkoholethoxylate/ Fettalkoholpolyglykolether | Rewopal^{®} LA10-80 (Laurylalcoholethoxylat, n=10) | 2,5 |
| Glyceride manoalkoxylate | Rewoderm^{®} LI63 (Cocosfettsäuremonoglyceridethoxytat, n=30) | 4,0 |
| Alkylphenolethoxylate | Rewopal^{®} HV25 (Nonylphenolethoxylat, n=25) | 1,6 |
| Ethoxylierte Sorbitanester | TEGO^{®} SML20 (PEG20 Sorbitan Monolaurat) | 4,9 |

| **Amphotere Tenside** | | |
|---|---|---|
| Amphoacetate | Rewoteric^{®} AM C (Cocoamphoacetat, Na) | 3,5 |
| Amphodiacetate | Rewoteric^{®} AM 2C NM (Cocoamphodiacetat, Na) | 3,8 |
| Glycinate | Rewoteric^{®} AM TEG (Talg glycinat) | 3,6 |
| Amphopropionate | Rewoteric^{®} AM KSF 40 (Cocoamphopropionat, Na) | 4,2 |
| Sultaine | Rewoteric^{®} AM CAS (cocamidopropyl hydroxyl sultaine) | 4,0 |
| Amine oxide | Rewominox^{®} L408 (Lauryl dimethylamine oxide) | 2,8 |
| Betaine | TEGO^{®} Betain F50 (Cocamidopropyl Betaine) | 0,8 |

Charakterisierung der Tenside:
- Rewopol^{®} NLS 28 (28 Gew.-% Dodecylsulfat, Na) erhältlich bei der Firma Degussa
- Hostapur^{®} SAS30 (30 Gew.-% C14/17 Alkylsulfat, Na) erhältlich bei der Firma Clariant
- Reworyl^{®} NKS 50 (50 Gew.-% C10/C13 Alkylbenzolsulfonat, Na, 50 Gew.-% Wasser) erhältlich bei der Firma Degussa
- Berol^{®} 522 (45 Gew.-% Decylphosphat, K) erhältlich bei der Firma Akzo Nobel
- Hostaphat^{®} OPS (100 Gew.-% Octylphosphonsäure) erhältlich bei der Firma Clariant
- Rewopol^{®} SB DO 75 (75 Gew.-% Diethylhexylsulfosuccinat, Na) erhältlich bei der Firma Degussa
- Rewopol^{®} SB FA 30 (40 Gew.-% Laurylethoxysulfosuccinate, Na) erhältlich bei der Firma Degussa
- Hostapur^{®} OS (42 Gew.-% C14/16 α-Olefinsulfonat, Na) erhältlich bei der Firma Clariant
- Hostapon^{®} SCI 85C (85 Gew.-% Cocosfettsäureisethionat, Na) erhältlich bei der Firma Clariant
- Hostapon^{®} CT (30 Gew.-% Cocosfettsäure methyltaurid, Na) erhältlich bei der Firma Clariant
- Rewoquat^{®} CPEM (100 Gew.-% Coco pentaethoxy methylammonium methosulfat) erhältlich bei der Firma Degussa
- Adogen^{®} 444-29 (29 Gew.-% Cetyl trimethylammonium chloride) erhältlich bei der Firma Degussa
- Rewopal^{®} LA10-80 (75 Gew.-% Laurylalcoholethoxylat, n=10) erhältlich bei der Firma Degussa
- Rewoderm^{®} Ll63 (100 Gew.-% Cocosfettsäuremonoglyceridethoxylat, n=30) der Firma Degussa
- Rewopal^{®} HV25 (100 Gew.-% Nonylphenolethoxylat, n=25) erhältlich bei der Firma Degussa
- TEGO^{®} SML20 (100 Gew.-% PEG20 Sorbitan Monolaurat) erhältlich bei der Firma Degussa
- Rewoteric^{®} AM C (25 Gew.-% Cocoamphoacetat, Na) erhältlich bei der Firma Degussa
- Rewoteric^{®} AM 2C NM (40 Gew.-% Cocoamphodiacetat, Na) erhältlich bei der Firma Degussa
- Rewoteric^{®} AM TEG (40 Gew.-% Talg glycinat) erhältlich bei der Firma Degussa
- Rewoteric^{®} AM KSF 40 (40 Gew.-% Cocoamphopropionat, Na) erhältlich bei der Firma Degussa
- Rewoteric^{®} AM CAS (40 - 45 Gew.-% Cocamidopropyl hydroxyl sultaine) erhältlich bei der Firma Degussa
- Rewominox^{®} L408 (30 Gew.-% Lauryl dimethylamine oxide) erhältlich bei der Firma Degussa
- TEGO^{®} Betain F50 (38 Gew.-% Cocamidopropyl Betaine) erhältlich bei der Firma Degussa.

Bei dem Verhältnis aus Polyethersiloxan A und Wasser in Tabelle X ergeben sich - zum Vergleich - bei Zusatz von 5 Gew.-% DPG nachfolgende Viskositäten.

**Tabelle XI**

| Gemisch aus dem Polyethersiloxanen und Wasser im Verhältnis der Tensidreihenversuche in Tabelle X mit 5 Gew.-% zugesetztem DPG | | | | |
|---|---|---|---|---|
| Polyethersiloxan | Gehalt Polyethersiloxan | Gehalt Wasser | Gehalt DPG | Viskosität (bei 1 s⁻¹) |
| | [Gew.-%] | [Gew.-%] | [Gew.-%] | [Pa·s] |
| A | 50 | 45 | 5 | 18,3 |

Es zeigt sich, dass sich aus jeder der aufgeführten Tensidgruppen (anionisch, kationisch, nichtionisch, amphoter) Beispiele finden lassen, bei denen die Viskosität in der Abmischung mit Wasser und dem Tensid die Viskosität von 5 Pa·s unterschreitet. Es lassen sich prinzipiell keine organischen Tensidgruppen ausnehmen. Ein Vergleich mit DPG (Tabelle XI) zeigt erneut die deutlich geringere Viskositätsabsenkung durch den Einsatz eines organischen Lösungsmittels.

### Bestimmung der Viskosität

Alle angegebenen Viskositäten der vorliegenden Beschreibung, wenn nicht anders angegeben, wurden wie folgt bestimmt.

Die Viskosität wurde in einem Rotationssexperiment bei 25° C bei einer Scherrate von 1 s⁻¹ unter Verwendung eines Rotationsviskosimeters MCR301 der Firma Physica (Anton Paar, Ostfildern, Germany) gemessen. Proben mit einer Viskosität > 100 mPa·s wurden mit einer Kegel-Platte Geometrie (Durchmesser = 50,0 mm, Winkel = 0,981 °) vermessen. Proben mit einer Viskosität < 100 mPa·s wurden mit einer Couette Geometrie untersucht - Durchmesser Messkörper = 26,66 mm, Messbecherdurchmesser = 28,93 mm, Messspaltbreite = 1,135 mm, Messspaltlänge = 40,014 mm. Weil manche Proben strukturviskoses Verhalten zeigten, wurden die Proben zuerst 60 Sekunden bei 1000 s⁻¹ geschert, um kontrollierte Anfangsbedingungen zu schaffen. Danach wurden die Proben 10 Minuten belassen ohne zu scheren. Während dieser Zeit konnte sich die Struktur erneut aufbauen. Danach wurde die Viskosität gemessen bei einer Scherrate von 1 s⁻¹. Dabei wurde bis zu 10 Minuten geschert, bis ein Gleichgewicht erreicht wurde. Proben, die kein strukturviskoses Verhalten zeigten, wurden ohne Vorbehandlung direkt bei 1 s⁻¹ gemessen bis das Gleichgewicht erreicht war.

## Patentansprüche

1. Niedrigviskose, wässrige Polyurethanheißweichschaumstabilisatorlösung mit einer Viskosität < 5000 mPa·s bei 25 °C, verwendbar bei der Herstellung von Polyurethanheißweichschäumen, **dadurch gekennzeichnet, dass** die niedrigviskose, wässrige Polyurethanheißweichschaumstabilisatorlösung die nachstehenden Komponenten umfasst:
≥ 40 Gew.-% bis ≤ 70 Gew.-% Polyethersiloxan,
≥0,5 Gew.-% bis ≤ 20 Gew.-% organisches Tensid,
≥ 10 Gew.-% Wasser,
≥ 0 Gew.-% organische Lösungsmittelzusätze,
worin das Polyethersiloxan die nachstehende Formel (I)
R¹-Si(CH₃)₂O-[Si(CH₃)(OSi(CH₃)₂R⁰)O-]ᵤ-[Si(OSi(CH₃)₂R⁰)₂O-]ᵥ[Si(CH₃)₂O-]_{w}-[SiCH₃R²O-]ₓ-[SiCH₃R³O-]_{y}-[SiCH₃R⁴O]_{z}-[SiR³R⁴O]ₜ-Si(CH₃)₂-R⁵ (I)
aufweist, worin
R⁰=-O-[Si(CH₃)₂O-]_{w}-[SiCH₃R²O-]ₓ-[SiCH₃R³O-]_{y}-[SiCH₃R⁴O]_{z}-Si(CH₃)₂-R⁵,
R¹, R², R³, R⁴ und R⁵ = gleich oder unterschiedlich voneinander jeweils ein Alkyl- oder Arylrest von 1 bis 12 Kohlenstoffatomen oder jeweils -CH₂-R⁶ oder -CH₂-CH₂-R⁶ oder Polyalkylenoxid-Polyether der Formel (II)
-CₘH₂ₘO(C₂H₄O)ₐ(C₃H₆O)_{b}(C₄H₈O)_{c}(C₆H₅-C₂H₃O)_{d}(C₁₂H₂₄O)_{g}R⁷ (II),
R⁶ = H, -C₆H₅, -CN, -Alkyl mit C₁ bis C₁₀, -CH-CH₂O (Epoxidring), -Alkyl-OH, -Aryl-OH, - Cl, -OH, -R⁸-O-R⁹, -R⁸-O-CO-R⁹ oder ein divalentes Brückenglied zu einem weiteren Siloxanrest ausgewählt aus der Gruppe Alkylen, -R⁸-O-R⁹-, -R⁸-COO-R⁹, - R⁸-O-R⁹-O-R⁸-, -R⁸-COO-R⁹-OOC-R⁸-, -R⁸-OOC-R⁹-COO-R⁸,
R⁷ = H, Alkyl-, Acyl-, Acetyl- oder Arylrest, Alkyl- oder Aryl-Urethangruppe oder ein divalentes Brückenglied zu einem weiteren Siloxanrest ausgewählt aus der Gruppe Alkylen, -R⁸-O-R⁹-, -R⁸-COO-R⁹, - R⁸-O-R⁹-O-R⁸-, -R⁸-COO-R⁹-OOC-R⁸-, -R⁸-OOC-R⁹-COO-R⁸-,
R⁸ = Alkyl- oder Aryl-,
R⁹ = Alkyl- oder Aryl-,
u = 0 bis 5,
v = 0 bis 5,
t = 0 bis 15,
w = 15 bis 130,
x = 0 bis 15,
y = 0 bis 15,
z = 0 bis 15,
m = 0 bis 4,
a= ≥ 0 bis ≤ 160,
b = ≥ 0 bis ≤ 140,
c = ≥ 0 bis ≤ 50,
g = ≥ 0 bis ≤ 50,
d = ≥ 0 bis ≤ 50, wobei a + b + c + d + g ≥10,
mit der Maßgabe, dass x + y + z + t ≥ 3, und dass mindestens ein Substituent R¹, R², R³, R⁴, R⁵ ein Polyether gemäß Formel II sind, wobei der Gewichtsanteil der vorgenannten Komponenten so gewählt ist, dass der Gesamtgewichtsanteil der Komponenten 100 Gew.-%, bezogen auf die Polyurethanheißweichschaumstabilisatorlösung, nicht übersteigt.

2. Polyurethanheißweichschaumstabilisatorlösung nach Anspruch 1, worin für das Polyethersiloxan
t = 2 bis 15 und besonders bevorzugt 4 bis 13 oder 0, und/oder
u = 0 bis 4 und besonders bevorzugt 1, 2 oder 0, und/oder
v = 0 bis 4 und besonders bevorzugt 1, 2 oder 0, und/oder
w = 50 bis 100, bevorzugt 55 bis 90 und am meisten bevorzugt 60 bis 85, und/oder
x = 2 bis 15 und besonders bevorzugt 4 bis 13 oder 0, und/oder
y = 2 bis 15 und besonders bevorzugt 4 bis 13 oder 0, und/oder
z = 2 bis 15 und besonders bevorzugt 4 bis 13 oder 0, und/oder
a = 1 bis 105, bevorzugt 5 bis 100 und am meisten bevorzugt 10 bis 90, und/oder
b = 1 bis 105, bevorzugt 5 bis 100 und am meisten bevorzugt 10 bis 90, und/oder
c = 1 bis 40, bevorzugt 2 bis 30 und am meisten bevorzugt 2 bis 20 oder 0, und/oder
d = 1 bis 40, bevorzugt 2 bis 30 und am meisten bevorzugt 2 bis 20 oder 0, und/oder
g = 1 bis 40, bevorzugt 2 bis 30 und am meisten bevorzugt 2 bis 20 oder 0, und/oder
m = 1 bis 4 und bevorzugt 2 bis 3, sind.

3. Polyurethanheißweichschaumstabilisatorlösung nach Anspruch 1 oder 2, worin das Polyethersiloxan die nachstehende Formel (III) aufweist: 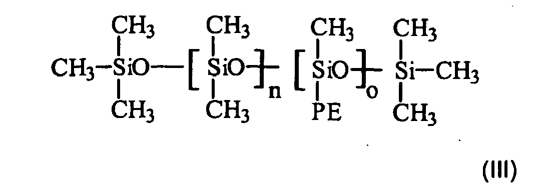 worin
n = 50 bis 120, vorzugsweise 60 bis 100 und bevorzugt 65 bis 90,
o = 3 bis 20, vorzugsweise 3,5 bis 18 und bevorzugt 4 bis 15, und
PE die nachstehende Formel IV aufweist: 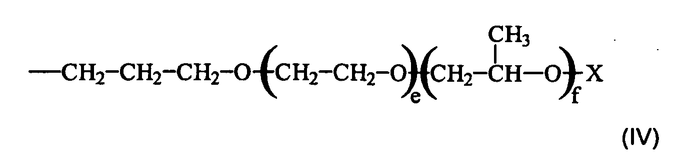 worin
X = H, Alkyl-, Acyl-, Acetyl- oder Arylrest,
e ≥ 0 - 100, vorzugsweise 1 bis 50, bevorzugt 3 bis 40 und besonders bevor- zugt 5 bis 30,
f ≥ 0 -120, vorzugsweise 1 bis 50, bevorzugt 5 bis 40 und besonders bevor- zugt 10 bis 30,wobei e + f ≥ 15.

4. Polyurethanheißweichschaumstabilisatorlösung nach einem der vorherigen Ansprüche, worin R¹ und R⁵ = gleich oder unterschiedlich voneinander jeweils Methyl, Ethyl oder Propyl, vorzugsweise Methyl; und/oder m = 2 oder 3 ist.

5. Polyurethanheißweichschaumstabilisatorlösung nach einem der vorherigen Ansprüche, worin die Polyethereinheiten eine Molmasse von 500 g/mol bis 7000 g/mol, vorzugsweise 1000 g/mol bis 6000 g/mol, bevorzugt 2000 g/mol bis 5000 g/mol und besonders bevorzugt ist wenigstens eine Polyethereinheit ≥ 2100 g/mol.

6. Polyurethanheißweichschaumstabilisatorlösung nach einem der vorherigen Ansprüche, worin der Anteil Ethylenoxid in der Polyethereinheit 10 Gew.-% bis 100 Gew.-% oder der Anteil Propylenoxid in der Polyethereinheit 10 Gew.-% bis 100 Gew.-% ausmacht.

7. Polyurethanheißweichschaumstabilisatorlösung nach einem der vorherigen Ansprüche, worin der Propylenoxidanteil, gemittelt über alle Polyethereinheiten des Polyethersiloxans, 40 Gew.-% bis 90 Gew.-%, vorzugsweise ≥ 50 Gew.-%, bevorzugt ≥ 55 Gew.-%, und besonders bevorzugt ≥ 60 Gew.-% ausmacht.

8. Polyurethanheißweichschaumstabilisatorlösung nach einem der vorherigen Ansprüche, worin die Polyethersiloxane ein Molekulargewicht von 10000 g/mol bis 50000 g/mol, vorzugsweise von 13000 g/mol bis 40000 g/mol und bevorzugt von 15000 g/mol bis 35000 g/mol aufweisen.

9. Polyurethanheißweichschaumstabilisatorlösung nach einem der vorherigen Ansprüche, worin die Polyurethanheißweichschaumstabilisatorlösung umfasst:
- ≥ 42 Gew.-% bis ≤ 68 Gew.-%, vorzugsweise ≥ 45 Gew.-% bis ≤ 65 Gew.-% und bevorzugt ≥ 47 Gew.-% bis ≤ 62 Gew.-% Polyethersiloxan, wobei ein Polyethersiloxangehalt von 50 Gew.-% bis 60 Gew.-% besonders bevorzugt ist,
- ≥ 1 Gew.-% bis ≤ 10 Gew.-%, vorzugsweise ≥ 2 Gew.-% bis ≤ 8 Gew.-% und bevorzugt ≥ 4 Gew.-% bis ≤ 6 Gew.-% organisches Tensid,
- ≥ 15 Gew.-% bis ≤ 55 Gew.-%, vorzugsweise ≥ 20 Gew.-% bis ≤ 50 Gew.-% und bevorzugt ≥ 30 Gew.-% bis ≤ 40 Gew.-% Wasser, und
- ≥ 0 Gew.-% bis ≤ 15 Gew.-%, vorzugsweise ≥ 1 Gew.-% bis ≤ 10 Gew.-% und bevorzugt ≥ 2 Gew.-% bis ≤ 5 Gew.-% organische Lösungsmittelzusätze, vorzugsweise Frostschutzmittel.

10. Polyurethanheißweichschaumstabilisatorlösung nach einem der vorherigen Ansprüche, worin die Polyurethanheißweichschaumstabilisatorlösung umfasst:
- ≥ 45 Gew.-% bis ≤ 55 Gew.-%, vorzugsweise 50 Gew.-% Polyethersiloxan,
- ≥ 1 Gew.-% bis ≤ 10 Gew.-%, vorzugsweise ≤ 2 Gew.-% bis ≤ 8 Gew.-% und bevorzugt 5 Gew.-% Alkylbenzolsulfonat,
- ≥ 30 Gew.-% bis ≤ 50 Gew.-%, vorzugsweise ≥ 35 Gew.-% bis ≤ 45 Gew.-% und bevorzugt 40 Gew.-% Wasser, und
- ≥ 1 Gew.-% bis ≤ 10 Gew.-%, vorzugsweise ≥ 3 Gew.-% bis ≤ 7 Gew.-% und bevorzugt 5 Gew.-% Dipropylenglykol.

11. Polyurethanheißweichschaumstabilisatorlösung nach einem der vorherigen Ansprüche, wobei die Polyurethanheißweichschaumstabilisatolösung eine Viskosität von ≥ 100 mPa·s bis ≤ 5.000 mPa·s, vorzugsweise eine Viskosität von ≥ 500 mPa·s bis ≤ 3000 mPa.s, bevorzugt eine Viskosität von ≥ 700 mPa·s bis ≤ 2000 mPa·s und besonders be vorzugt eine Viskosität von ≥ 900 mPa·s bis ≤ 1800 mPa·s.

12. Polyurethanheißweichschaumstabilisatorlösung nach einem der vorherigen Ansprüche, wobei die Polyurethanheißweichschaumstabilisatorlösung eine transparente Lösung, bevorzugt eine klare Lösung ist.

13. Polyurethanheißweichschaumstabilisatorlösung nach einem der vorherigen Ansprüche, wobei die Polyurethanheißweichschaumstabilisatorlösung bei Raumtemperatur lagerstabil ist und über einen Zeitraum von mindestens 14 Tagen keine Phasentrennung und/oder Ausfällung auftritt.

14. Polyurethanheißweichschaumstabilisatorlösung nach einem der vorherigen Ansprüche, wobei die Polyurethanheißweichschaumstabilisatorlösung einen Trübungspunkt von ≥ 40° C, vorzugsweise ≥ 50° C und bevorzugt ≥ 60° C aufweist.

15. Polyurethanheißweichschaumstabilisatorlösung nach einem der vorherigen Ansprüche, wobei das organische Tensid ausgewählt ist aus der Gruppe umfassend anionische Tenside, kationische Tenside, nichtionische Tenside und/oder amphotere Tenside, wobei das organische Tensid vorzugsweise ein Aniontensid ist, besonders bevorzugt ein organisches Sulfat- oder Sulfonattensid, am meisten bevorzugt ist das Tensid ein Alkylbenzolsulfonat.

16. Polyurethanheißweichschaumstabilisatorlösung nach einem der vorherigen Ansprüche, wobei das anionische Tensid ausgewählt ist aus der Gruppe umfassend Alkylsulfate, Fettalkoholsulfate, sekundäre Alkylsulfate, Paraffinsulfonate, Alkylethersulfate, Alkylpolyglykolethersulfate, Arylsulfonat, Fettalkolholethersulfate, Alkylbenzolsulfonate, Alkylphenolethersulfate, Alkylphosphate, Phosphorsäure-mono-,di-, tri-Ester, Alkyletherphosphate, Ethoxylierte Fettalkoholphosphorsäureester, Phosphonsäureester, Sulfobernsteinsäurediester, Sulfobernsteinsäuremonoester, ethoxylierte Sulfobemsteinsäuremonoester, Sulfosuccinamide, α-Olefinsulfonate, Alkylcarboxylate, Alkylethercarboxylate, Alkylpolyglykolcarboxylate, Fettsäureisethionat, Fettsäuremethyltaurid, Fettsäuresarkosid, Arylsulfonate, Naphtalinsulfonate, Alkylglycerylethersulfonate, Polyacrylate und/oder α-Sulfofettsäureester.

17. Polyurethanheißweichschaumstabilisatorlösung nach einem der vorherigen Ansprüche, wobei das kationische Tensid ausgewählt ist aus der Gruppe umfassend Esterquats, vorzugsweise Di-(talgfettsäureamidoethyl)methylpolyethoxyammoniummethosulfat, Diamidoaminquats, Alkyloxyalkylquats, vorzugsweise Cocopentaethoxymethylammoniummethosulfat und/oder Trialkylquats, vorzugsweise Cetyltrimethylammoniumchlorid.

18. Polyurethanheißweichschaumstabilisatorlösung nach einem der vorherigen Ansprüche, wobei das nichtionische Tensid ausgewählt ist aus der Gruppe umfassend Alkoholethoxylate, Fettalkoholpolyglykolether, Fettsäureethoxylate, Fettsäurepolyglykolester, Glyceridmonoalkoxylate, Alkanolamide, Fettsäurealkylolamide, ethoxylierte Alkanolamide, Fettsäurealkylolamido-ethoxylate, Imidazoline, Ethylenoxid-Propylenoxid-Blockcopolymere, Alkylphenolethoxylate, Alkylglucoside, ethoxylierte Sorbitanester und/oder Aminalkoxylate.

19. Polyurethanheißweichschaumstabilisatorlösung nach einem der vorherigen Ansprüche, wobei das amphotere Tensid ausgewählt ist aus der Gruppe umfassend Amphoacetate, Amphodiacetate, Glycinate, Amphopropionate, Sultaine, Aminoxide und/oder Betaine.

20. Polyurethanheißweichschaumstabilisatorlösung nach einem der vorherigen Ansprüche, wobei die Polyurethanheißweichschaumstabilisatorlösung als zusätzliches Additiv wenigstens eine salzartige Verbindung aus der Gruppe umfassend anorganische und organische Salze in einem Anteil von ≥0 bis ≤5 Gew.-% enthält. Die Kationen kommen vorzugsweise aus der Gruppe der Alkalisalze und Erdalkalisalze, insbesondere Lithium-, Natrium-, Kalium-, Ammonium- und substituierte Ammoniumsalze, wie Mono-, Di- und Triethanolaminsalze. Die Annionen insbesondere aus der Gruppe der Sulfate, Halogenide und Carboxylate, besonders bevorzugt aus der Gruppe der Benzoate und Lactate.

21. Polyurethanheißweichschaumstabilisatorlösung nach einem der vorherigen Ansprüche, wobei die Polyurethanheißweichschaumstabilisatorlösung als zusätzliches Additiv wenigstens eine polyhydroxyfunktionelle Verbindung enthält, die eine Funktionalität ≥3 besitzt, wobei die polyhydroxyfunktionelle Verbindung vorzugsweise ausgewählt ist aus der Gruppe umfassend Glyzerin, Trimetholpropan, Pentaerythrit, niedermolekulare Kohlehydrate und/oder hochmolekulare Kohlenhydrate. Der Anteil der polyhydroxyfunktionellen Additive beträgt dabei bevorzugt ≥0 bis ≤10 Gew.-% bezogen auf die Polyurethanheißweichschaumstabilisatorlösung.

22. Polyurethanheißweichschaumstabilisatorlösung nach einem der vorherigen Ansprüche, wobei die Lösung wenigstens ein Additiv aufweist, ausgewählt aus der Gruppe umfassend Katalysatoren, Treibmittel, Biozide, Antioxidantien, Puffersubstanzen und/oder Flammschutzmittel.

23. Polyurethanheißweichschaumstabilisatorabmischung enthaltend Amin, Polyol und/oder Wasser, wobei die Polyurethanheißweichschaumstabilisatorabmischung mindestens 40 Gew.-% Polyurethanheißweichschaumstabilisatorlösung, bezogen auf das Gesamtgewicht der Polyurethanheißweichschaumstabilisatorabmischung, gemäß einem der vorherigen Ansprüche 1 bis 22 aufweist.

24. Verwendung der Polyurethanheißweichschaumstabilisatorlösung nach einem der Ansprüche 1 bis 22 und/oder der Polyurethanheißweichschaumstabilisatorabmischung nach Anspruch 23 bei der Herstellung von Polyurethanheißweichschäumen.

25. Polyurethanheißweichschaum erhältlich aus der Reaktion von Polyolen mit Isocyanaten unter Verwendung einer Polyurethanheißweichschaumstabilisatorlösung nach einem der Ansprüche 1 bis 22 und/oder einer Polyurethanheißweichschaumstabilisatorabmischung nach Anspruch 23.

26. Polyurethanheißweichschaum nach Anspruch 25, wobei der Polyurethanheißweichschaum eine Porengrößenverteilung im Bereich von 3 Zellen/cm bis 25 Zellen/cm hat.

27. Erzeugnis enthaltend einen Polyurethanheißweichschaum nach Anspruch 25 oder 26.

## Claims

1. Low-viscosity aqueous hot-cure flexible polyurethane foam stabilizer solution having a viscosity of < 5000 mPa.s at 25°C which can be used in the production of hot-cure flexible polyurethane foams, **characterized in that** the low-viscosity aqueous hot-cure flexible polyurethane foam stabilizer solution comprises the following components:
≥ 40% to ≤ 70% by weight of polyethersiloxane,
≥ 0.5% to ≤ 20% by weight of organic surfactant,
≥ 10% by weight of water,
≥ 0% by weight of organic solvent additions,
in which the polyethersiloxane has the following formula (I)
R¹-Si(CH₃)₂O-[Si(CH₃)(OSi(CH₃)₂R⁰)O-]ᵤ-[Si(OSi(CH₃)₂R⁰)₂O-]ᵥ-[Si(CH₃)₂O-]_{w}-[SiCH₃R²O-]ₓ-[SiCH₃R³O-]_{y}-[SiCH₃R⁴O]_{z}-[SiR³R⁴O]ₜ-Si(CH₃)₂-R⁵ (I)
in which
R⁰=-O-[Si(CH₃)₂O-]_{w}-[SiCH₃R²O-]ₓ-[SiCH₃R³O-]_{y}-[SiCH₃R⁴O]_{z}-Si(CH₃)₂-R⁵,
R¹, R², R³, R⁴ and R⁵ = identically to or differently from one another in each case an alkyl or aryl radical of 1 to 12 carbon atoms or in each case -CH₂-R⁶ or -CH₂-CH₂-R⁶ or polyalkylene oxide polyether of the formula (II)
-CₘH₂ₘO(C₂H₄O)ₐ(C₃H₆O)_{b}(C₄H₈O)_{c}(C₆H₅-C₂H₃O)_{d}(C₁₂H₂₄O)_{g}R⁷ (II),
R⁶ = H, -C₆H₅, -CN, -alkyl with C₁ to C₁₀, -CH-CH₂O (epoxide ring), -alkyl-OH, - aryl-OH, -Cl, -OH, -R⁸-O-R⁹, -R⁸-O-CO-R⁹ or a divalent bridge to a further siloxane radical, selected from the group consisting of alkylene, -R⁸-OR⁹-, -R⁸-COO-R⁹, - R⁸-O-R⁹-O-R⁸-, -R⁸-COO-R⁹-OOC-R⁸-, -R⁸-OOC-R⁹-COO-R⁸-,
R⁷ = H, alkyl, acyl, acetyl or aryl radical, alkyl- or aryl-urethane group or a divalent bridge to a further siloxane radical, selected from the group consisting of alkylene, -R⁸-O-R⁹-, -R⁸-COO-R⁹, - R⁸-O-R⁹-O-R⁸-, -R⁸-COO-R⁹-OOC-R⁸-, -R⁸-OOC-R⁹-COO-R⁸-,
R⁸ = alkyl- or aryl-,
R⁹ = alkyl- or aryl-,
u = 0 to 5,
v = 0 to 5,
t = 0 to 15,
w = 15 to 130,
x = 0 to 15,
y = 0 to 15,
z = 0 to 15,
m = 0 to 4,
a = ≥ 0 to ≤ 160,
b = ≥ 0 to ≤ 140,
c = ≥ 0 to ≤ 50,
g = ≥ 0 to ≤ 50,
d = ≥ 0 to ≤ 50, it being the case that a + b + c + d + g ≥ 10,
with the proviso that x + y + z + t ≥ 3, and that at least one substituent R¹, R², R³, R⁴, and R⁵ is a polyether of the formula II, the weight fraction of the aforementioned components being selected such that the overall weight fraction of the components does not exceed 100% by weight, based on Hot-cure flexible polyurethane foam stabilizer solution.

2. Hot-cure flexible polyurethane foam stabilizer solution according to Claim 1, **characterized in that** for the polyethersiloxane
t = 2 to 15 and more preferably 4 to 13 or 0, and/or
u = 0 to 4 and more preferably 1, 2 or 0, and/or
v = 0 to 4 and more preferably 1, 2 or 0, and/or
w = 50 to 100, preferably 55 to 90, and most preferably 60 to 85, and/or
x = 2 to 15 and more preferably 4 to 13 or 0, and/or
y = 2 to 15 and more preferably 4 to 13 or 0, and/or
z = 2 to 15 and more preferably 4 to 13 or 0, and/or
a = 1 to 105, preferably 5 to 100, and most preferably 10 to 90, and/or
b = 1 to 105, preferably 5 to 100, and most preferably 10 to 90, and/or
c = 1 to 40, preferably 2 to 30, and most preferably 2 to 20 or 0, and/or
d = 1 to 40, preferably 2 to 30, and most preferably 2 to 20 or 0, and/or
g = 1 to 40, preferably 2 to 30, and most preferably 2 to 20 or 0, and/or
m = 1 to 4 and preferably 2 to 3.

3. Hot-cure flexible polyurethane foam stabilizer solution according to Claim 1 or 2, **characterized in that** the polyethersiloxane has the following formula (III): 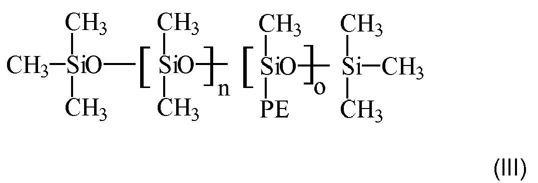 in which
n = 50 to 120, preferably 60 to 100, and more preferably 65 to 90,
o = 3 to 20, preferably 3.5 to 18, and more preferably 4 to 15, and
PE has the following formula IV: 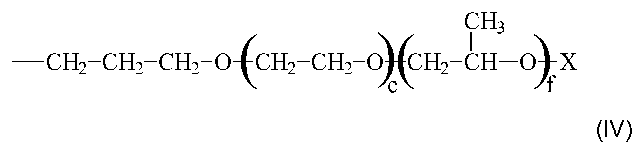 in which
X = H, alkyl, acyl, acetyl or aryl radical,
e ≥ 0 - 100, preferably 1 to 50, more preferably 3 to 40, and with particular preference 5 to 30,
f ≥ 0 - 120, preferably 1 to 50, more preferably 5 to 40, and with particular preference 10 to 30, where e + f ≥ 15.

4. Hot-cure flexible polyurethane foam stabilizer solution according to any one of the preceding claims, **characterized in that** R¹ and R⁵ = identically to or differently from one another in each case methyl, ethyl or propyl, preferably methyl; and/or m = 2 or 3.

5. Hot-cure flexible polyurethane foam stabilizer solution according to any one of the preceding claims, **characterized in that** the polyether units have a molar mass of 500 g/mol to 7000 g/mol, preferably 1000 g/mol to 6000 g/mol, more preferably 2000 g/mol to 5000 g/mol, and with particular preference at least one polyether unit is ≥ 2100 g/mol.

6. Hot-cure flexible polyurethane foam stabilizer solution according to any one of the preceding claims, **characterized in that** the fraction of ethylene oxide in the polyether unit is 10% to 100% by weight or the fraction of propylene oxide in the polyether unit is 10% to 100% by weight.

7. Hot-cure flexible polyurethane foam stabilizer solution according to any one of the preceding claims, **characterized in that** the propylene oxide fraction, averaged over all the polyether units of the polyethersiloxane, is 40% to 90% by weight, preferably ≥ 50% by weight, more preferably ≥ 55% by weight, and with particular preference ≥ 60% by weight.

8. Hot-cure flexible polyurethane foam stabilizer solution according to any one of the preceding claims, **characterized in that** the polyethersiloxanes have a molecular weight of 10 000 g/mol to 50 000 g/mol, preferably 13 000 g/mol to 40 000 g/mol, and more preferably of 15 000 g/mol to 35 000 g/mol.

9. Hot-cure flexible polyurethane foam stabilizer solution according to any one of the preceding claims, **characterized in that** Hot-cure flexible polyurethane foam stabilizer solution comprises:
- ≥ 42% to ≤ 68%, preferably ≥ 45% to ≤ 65%, and more preferably ≥ 47% to ≤ 62% by weight of polyethersiloxane, a polyethersiloxane content of 50% to 60% by weight being particularly preferred,
- ≤ 1 % to ≤ 10%, preferably ≥ 2% to ≤ 8%, and more preferably ≥ 4% to ≤ 6% by weight of organic surfactant,
- ≥ 15% to ≤ 55%, preferably ≥ 20% to ≤ 50%, and more preferably ≥ 30% to ≤ 40% by weight of water, and
- ≥ 0% to ≤ 15%, preferably ≥ 1% to ≤ 10%, and more preferably ≥ 2% to ≤ 5% by weight of organic solvent additions, preferably antifreeze agents.

10. Hot-cure flexible polyurethane foam stabilizer solution according to any one of the preceding claims, **characterized in that** Hot-cure flexible polyurethane foam stabilizer solution comprises :
- ≥ 45% to ≤ 55%, preferably 50% by weight of polyethersiloxane,
- ≥ 1% to ≤ 10%, preferably ≥ 2% to ≤ 8%, and more preferably 5% by weight of alkylbenzenesulfonate,
- ≥ 30% to ≤ 50%, preferably ≥ 35% to ≤ 45%, and more preferably 40% by weight of water, and
- ≥ 1 % to ≤ 10%, preferably ≥ 3% to ≤ 7%, and more preferably 5% by weight of dipropylene glycol.

11. Hot-cure flexible polyurethane foam stabilizer solution according to any one of the preceding claims, **characterized in that** Hot-cure flexible polyurethane foam stabilizer solution has a viscosity of ≥ 100 mPa·s to ≤ 5000 mPa·s, preferably a viscosity of ≥ 500 mPa·s to ≤ 3000 mPa·s, more preferably a viscosity of ≥ 700 mPa·s to ≤ 2000 mPa·s, and with particular preference a viscosity of ≥ 900 mPa·s to ≤ 1800 mPa·s.

12. Hot-cure flexible polyurethane foam stabilizer solution according to any one of the preceding claims, **characterized in that** Hot-cure flexible polyurethane foam stabilizer solution is a transparent solution, preferably a clear solution.

13. Hot-cure flexible polyurethane foam stabilizer solution according to any one of the preceding claims, **characterized in that** Hot-cure flexible polyurethane foam stabilizer solution is storage-stable at room temperature and over a period of at least 14 days no phase separation and/or precipitation occurs.

14. Hot-cure flexible polyurethane foam stabilizer solution according to any one of the preceding claims, **characterized in that** Hot-cure flexible polyurethane foam stabilizer solution has a cloud point of ≥ 40°C, preferably ≥ 50°C, and more preferably ≥ 60°C.

15. Hot-cure flexible polyurethane foam stabilizer solution according to any one of the preceding claims, **characterized in that** the organic surfactant is selected from the group encompassing anionic surfactants, cationic surfactants, nonionic surfactants and/or amphoteric surfactants, the organic surfactant being preferably an anionic surfactant, more preferably an organic sulfate or sulfonate surfactant, most preferably an alkylbenzenesulfonate.

16. Hot-cure flexible polyurethane foam stabilizer solution according to any one of the preceding claims, **characterized in that** the anionic surfactant is selected from the group encompassing alkyl sulfates, fatty alcohol sulfates, secondary alkyl sulfates, paraffinsulfonates, alkyl ether sulfates, alkyl polyglycol ether sulfates, arylsulfonate, fatty alcohol ether sulfates, alkylbenzenesulfonates, alkylphenol ether sulfates, alkyl phosphates, phosphoric mono-, di-, tri-esters, alkyl ether phosphates, ethoxylated fatty alcohol phosphoric esters, phosphonic esters, sulfosuccinic diesters, sulfosuccinic monoesters, ethoxylated sulfosuccinic monoesters, sulfosuccinamides, α-olefinsulfonates, alkyl carboxylates, alkyl ether carboxylates, alkyl polyglycol carboxylates, fatty acid isethionate, fatty acid methyltauride, fatty acid sarcoside, arylsulfonates, naphthalenesulfonates, alkyl glyceryl ether sulfonates, polyacrylates and/or α-sulfo fatty acid esters.

17. Hot-cure flexible polyurethane foam stabilizer solution according to any one of the preceding claims, **characterized in that** the cationic surfactant is selected from the group encompassing ester quats, preferably di(tallow fatty acid amidoethyl)methylpolyethoxyammonium methosulfate, diamidoamine quats, alkyloxyalkyl quats, preferably cocopentaethoxymethylammonium methosulfate, and/or trialkyl quats, preferably cetyltrimethylammonium chloride.

18. Hot-cure flexible polyurethane foam stabilizer solution according to any one of the preceding claims, **characterized in that** the nonionic surfactant is selected from the group encompassing alcohol ethoxylates, fatty alcohol polyglycol ethers, fatty acid ethoxylates, fatty acid polyglycol esters, glyceride monoalkoxylates, alkanolamides, fatty acid alkylolamides, ethoxylated alkanolamides, fatty acid alkylolamido-ethoxylates, imidazolines, ethylene oxide-propylene oxide block copolymers, alkylphenol ethoxylates, alkylglucosides, ethoxylated sorbitan esters and/or amine alkoxylates.

19. Hot-cure flexible polyurethane foam stabilizer solution according to any one of the preceding claims, **characterized in that** the amphoteric surfactant is selected from the group encompassing amphoacetates, amphodiacetates, glycinates, amphopropionates, sultaines, amine oxides and/or betaines.

20. Hot-cure flexible polyurethane foam stabilizer solution according to any one of the preceding claims, **characterized in that** Hot-cure flexible polyurethane foam stabilizer solution comprises as additional additive at least one saltlike compound from the group encompassing organic and inorganic salts in a fraction of ≥ 0% to ≥ 5% by weight; the cations come preferably from the group of the alkali metal salts and alkaline earth metal salts, especially lithium salts, sodium salts, potassium salts, ammonium salts, and substituted ammonium salts, such as mono-, di-, and tri-ethanolamine salts, and the anions come in particular from the group of the sulfates, halides, and carboxylates, with particular preference from the group of the benzoates and lactates.

21. Hot-cure flexible polyurethane foam stabilizer solution according to any one of the preceding claims, **characterized in that** Hot-cure flexible polyurethane foam stabilizer solution comprises as additional additive at least one polyhydroxy-functional compound possessing a functionality ≥ 3, the polyhydroxy-functional compound being selected preferably from the group encompassing glycerol, trimethylolpropane, pentaerythritol, low molecular mass carbohydrates and/or high molecular mass carbohydrates, and the fraction of the polyhydroxy-functional additives being preferably ≥ 0% to ≥ 10% by weight, based on Hot-cure flexible polyurethane foam stabilizer solution.

22. Hot-cure flexible polyurethane foam stabilizer solution according to any one of the preceding claims, **characterized in that** the solution contains at least one additive selected from the group encompassing catalysts, blowing agents, biocides, antioxidants, buffer substances and/or flame retardants.

23. Hot-cure flexible polyurethane foam stabilizer blend comprising amine, polyol and/or water, **characterized in that** Hot-cure flexible polyurethane foam stabilizer blend has at least 40% by weight of hot-cure flexible polyurethane foam stabilizer solution, based on the total weight of Hot-cure flexible polyurethane foam stabilizer blend, according to one of Claims 1 to 22 above.

24. Use of Hot-cure flexible polyurethane foam stabilizer solution according to any one of Claims 1 to 22 or of Hot-cure flexible polyurethane foam stabilizer blend of Claim 23 in the production of hot-cure flexible polyurethane foams.

25. Hot-cure flexible polyurethane foam obtainable from the reaction of polyols with isocyanates using a hot-cure flexible polyurethane foam stabilizer solution of any one of Claims 1 to 22 and/or a hot-cure flexible polyurethane foam stabilizer blend of Claim 23.

26. Hot-cure flexible polyurethane foam of Claim 25, **characterized in that** Hot-cure flexible polyurethane foam has a pore size distribution in the range from 3 cells/cm to 25 cells/cm.

27. Product comprising a hot-cure flexible polyurethane foam of Claim 25 or 26.

## Revendications

1. Solution aqueuse de faible viscosité de stabilisateur de mousse molle chaude de polyuréthane présentant une viscosité < 5000 mPa.s à 25°C, utilisable lors de la production de mousses molles chaudes de polyuréthane, **caractérisée en ce que** la solution aqueuse de faible viscosité de stabilisateur de mousse molle chaude de polyuréthane comprend les composants suivants :
- ≥ 4 0 % en poids à ≤ 70% en poids de polyéthersiloxane,
- ≥ 0,5% en poids à ≤ 20% en poids d'agent tensioactif organique,
- ≥ 10% en poids d'eau,
- ≥ 0% en poids d'additifs organiques pour solvant,
où le polyéthersiloxane présente la formule suivante (I)
R¹-Si(CH₃)₂O-[Si(CH₃)(OSi(CH₃)₂R⁰)O-]ᵤ-[Si(OSi(CH₃)₂R⁰) ₂O-]ᵥ-[Si(CH₃)₂O-]_{w}-[SiCH₃R²O-]ₓ-[SiCH₃R³O-]_{y}-[SiCH₃R⁴O]_{z}-[SiR³R⁴O]ₜ-Si(CH₃)₂-R⁵ (I)
où
R⁰ = -O-[Si(CH₃)₂O-]_{w}-[SiCH₃R²O-]ₓ-[SiCH₃R³O-]_{y}-[SiCH₃R⁴O]_{z}-Si(CH₃)₂-R⁵,
R¹, R², R³, R⁴ et R⁵ = en étant identiques ou différents les uns des autres, à chaque fois un radical alkyle ou aryle comprenant 1 à 12 atomes de carbone ou à chaque fois -CH₂-R⁶ ou -CH₂-CH₂-R⁶ ou un poly(oxyde d'alkylène)-polyéther de formule (II)
-CₘH₂ₘO(C₂H₄O)ₐ(C₃H₆O)_{b}(C₄H₈O)_{c}(C₆H₅-C₂H₃O)_{d}(C₁₂H₂₄O)_{g}R⁷ (II),
R⁶ - H, -C₆H₅, -CN, -alkyle en Ci à C₁₀, -CH-CH₂O (cycle époxyde), -alkyl-OH, -aryl-OH, -Cl, -OH, -R⁸-O-R⁹, -R⁸-O-CO-R⁹ ou un élément de pont divalent vers un autre radical siloxane choisi dans le groupe alkylène, -R⁸-O-R⁹-, -R⁸-COO-R⁹, -R⁸-O-R⁹-O-R⁸-, -R⁸-COO-R⁹-OOC-R⁸-, -R⁸-OOC-R⁹-COO-R⁸-,
R⁷ = H, un radical alkyle, acyle, acétyle ou aryle, un groupe alkyl-uréthane ou aryl-uréthane ou un élément de pont divalent vers un autre radical siloxane choisi dans le groupe alkylène, -R⁸-O-R⁹, -R⁸-COO-R⁹, -R⁸-O-R⁹-O-R⁸-, -R⁸-COO-R⁹-OOC-R⁸-, -R⁸-OOC-R⁹-COO-R⁸-,
R⁸ = alkyle ou aryle,
R⁹ = alkyle ou aryle,
u = 0 à 5,
v = 0 à 5,
t = 0 à 15,
w = 15 à 130,
x = 0 à 15,
y = 0 à 15,
z = 0 à 15,
m = 0 à 4,
a = ≥ 0 à ≤ 160,
b = ≥ 0 à ≤ 140,
c = ≥ 0 à ≤ 50,
g = ≥ 0 à ≤ 50,
d = ≥ 0 à ≤ 50, où a + b +c + d + g ≥ 10,
à condition que x + y + z + t ≥ 3, et qu'au moins un substituant R¹, R², R³, R⁴, R⁵ représente un polyéther selon la formule II, où la proportion en poids des composants susmentionnés est choisie de manière telle que la proportion en poids totale des composants ne dépasse pas 100% en poids, par rapport à la solution de stabilisateur de mousse molle chaude de polyuréthane.

2. Solution de stabilisateur de mousse molle chaude de polyuréthane selon la revendication 1, où, pour le polyéthersiloxane
t = 2 à 15 et de manière particulièrement préférée 4 à 13 ou 0, et/ou
u = 0 à 4 et de manière particulièrement préférée 1, 2 ou 0, et/ou
v = 0 à 4 et de manière particulièrement préférée 1, 2 ou 0, et/ou
w = 50 à 100, de préférence 55 à 90 et le plus préférablement 60 à 85, et/ou
x = 2 à 15 et de manière particulièrement préférée 4 à 13 ou 0, et/ou
y = 2 à 15 et de manière particulièrement préférée 4 à 13 ou 0, et/ou
z = 2 à 15 et de manière particulièrement préférée 4 à 13 ou 0, et/ou
a = 1 à 105, de préférence 5 à 100 et le plus préférablement 10 à 90, et/ou
b = 1 à 105, de préférence 5 à 100 et le plus préférablement 10 à 90, et/ou
c = 1 à 40, de préférence 2 à 30 et le plus préférablement 2 à 20 ou 0, et/ou
d = 1 à 40, de préférence 2 à 30 et le plus préférablement 2 à 20 ou 0, et/ou
g = 1 à 40, de préférence 2 à 30 et le plus préférablement 2 à 20 ou 0, et/ou
m = 1 à 4 et de préférence 2 à 3.

3. Solution de stabilisateur de mousse molle chaude de polyuréthane selon la revendication 1 ou 2, où le polyéthersiloxane présente la formule (III) suivante : 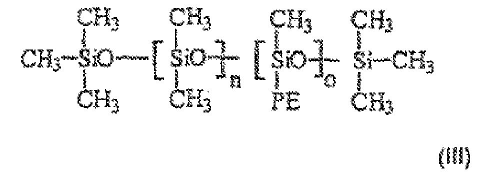 où
n = 50 à 120, de préférence 60 à 100 et préférablement 65 à 90,
o = 3 à 20, de préférence 3,5 à 18 et préférablement 4 à 15, et
PE présente la formule IV suivante : 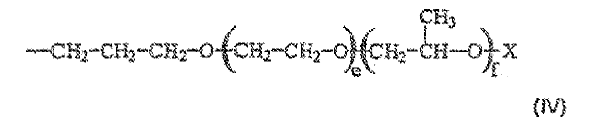 où
X = H, un radical alkyle, acyle, acétyle ou aryle,
e ≥ 0-100, de préférence 1 à 50, préférablement 3 à 40 et de manière particulièrement préférée 5 à 30,
f ≥ 0-120, de préférence 1 à 50, préférablement 5 à 40 et de manière particulièrement préférée 10 à 30, où e + f ≥ 15.

4. Solution de stabilisateur de mousse molle chaude de polyuréthane selon l'une quelconque des revendications précédentes, où R¹ et R⁵ = en étant identiques ou différents l'un de l'autre, à chaque fois méthyle, éthyle ou propyle, de préférence méthyle ; et/ou m = 2 ou 3.

5. Solution de stabilisateur de mousse molle chaude de polyuréthane selon l'une quelconque des revendications précédentes, où les unités polyéther présentent une masse molaire de 500 g/mole à 7000 g/mole, de préférence de 1000 g/mole à 6000 g/mole, préférablement de 2 0 00 g/mole à 5000 g/mole et on préfère en particulier au moins une unité polyéther ≥ 2100 g/mole.

6. Solution de stabilisateur de mousse molle chaude de polyuréthane selon l'une quelconque des revendications précédentes, où la proportion d'oxyde d'éthylène dans l'unité polyéther représente 10% en poids à 100% en poids ou la proportion d'oxyde de propylène dans l'unité polyéther représente 10% en poids à 100% en poids.

7. Solution de stabilisateur de mousse molle chaude de polyuréthane selon l'une quelconque des revendications précédentes, où la proportion d'oxyde de propylène, en moyenne sur toutes les unités polyéther du polyéthersiloxane représente 40% en poids à 90% en poids, de préférence ≥ 50% en poids, préférablement ≥ 55% en poids et de manière particulièrement préférée ≥ 60% en poids.

8. Solution de stabilisateur de mousse molle chaude de polyuréthane selon l'une quelconque des revendications précédentes, où les polyéthersiloxanes présentent un poids moléculaire de 10 000 g/mole à 50 000 g/mole, de préférence de 13 000 g/mole à 40 000 g/mole et préférablement de 15 000 g/mole à 35 000 g/mole.

9. Solution de stabilisateur de mousse molle chaude de polyuréthane selon l'une quelconque des revendications précédentes, où la solution de stabilisateur de mousse molle chaude de polyuréthane comprend
- ≥ 42% en poids à ≤ 68% en poids, de préférence ≥ 45% en poids à ≤ 65% en poids et préférablement ≥ 47% en poids à ≤ 62% en poids de polyéthersiloxane, où une teneur de polyéthersiloxane de 50% en poids à 60% en poids est particulièrement préférée,
- ≥ 1% en poids à 10% en poids, de préférence ≥ 2% en poids à ≤ 8% en poids et préférablement ≥ 4% en poids à ≤ 6% en poids d'un agent tensioactif organique,
- ≥ 15% en poids à ≤ 55% en poids, de préférence ≥ 20% en poids à ≤ 50% en poids et préférablement ≥ 30% en poids à ≤ 40% en poids d'eau, et
- ≥ 0% en poids à ≤ 15% en poids, de préférence ≥ 1% en poids à ≤ 10% en poids et préférablement ≥ 2% en poids à ≤ 5% en poids d'additifs organiques pour solvant, de préférence un agent antigel.

10. Solution de stabilisateur de mousse molle chaude de polyuréthane selon l'une quelconque des revendications précédentes, où la solution de stabilisateur de mousse molle chaude de polyuréthane comprend
- ≥ 45% en poids à ≤ 55% en poids, de préférence 50% en poids de polyéthersiloxane,
- ≥ 1% en poids à ≤ 10% en poids, de préférence ≥ 2% en poids à ≤ 8% en poids et préférablement 5% en poids d'alkylbenzènesulfonate,
- ≥ 30% en poids à ≤ 50% en poids, de préférence ≥ 35% en poids à ≤ 45% en poids et préférablement 40% en poids d'eau, et
- ≥ 1% en poids à ≤ 10% en poids, de préférence ≥ 3% en poids à ≤ 7% en poids et préférablement 5% en poids d'eau de dipropylèneglycol.

11. Solution de stabilisateur de mousse molle chaude de polyuréthane selon l'une quelconque des revendications précédentes, où la solution de stabilisateur de mousse molle chaude de polyuréthane présente une viscosité de ≥ 100 mPa.s à ≤ 5000 mPa.s, de préférence une viscosité de ≥ 500 mPa.s à ≤ 3000 mPa.s, préférablement une viscosité de ≥ 700 mPa.s à ≤ 2000 mPa.s et de manière particulièrement préférée une viscosité de ≥ 900 mPa.s à ≤ 1800 mPa.s.

12. Solution de stabilisateur de mousse molle chaude de polyuréthane selon l'une quelconque des revendications précédentes, où la solution de stabilisateur de mousse molle chaude de polyuréthane est une solution transparente, de préférence une solution claire.

13. Solution de stabilisateur de mousse molle chaude de polyuréthane selon l'une quelconque des revendications précédentes, où la solution de stabilisateur de mousse molle chaude de polyuréthane est stable à l'entreposage à température ambiante et ne présente pas de séparation de phases et/ou de précipitation sur un laps de temps d'au moins 14 jours.

14. Solution de stabilisateur de mousse molle chaude de polyuréthane selon l'une quelconque des revendications précédentes, où la solution de stabilisateur de mousse molle chaude de polyuréthane présente un point de trouble ≥ 40°C, de préférence ≥ 50°C et préférablement ≥ 60°C.

15. Solution de stabilisateur de mousse molle chaude de polyuréthane selon l'une quelconque des revendications précédentes, où l'agent tensioactif organique est choisi dans le groupe comprenant les agents tensioactifs anioniques, les agents tensioactifs cationiques, les agents tensioactifs non ioniques et/ou les agents tensioactifs amphotères, ou l'agent tensioactif organique est de préférence un agent tensioactif anionique, de manière particulièrement préférée un agent tensioactif organique de type sulfate ou sulfonate, le plus préférablement, l'agent tensioactif est un alkylbenzènesulfonate.

16. Solution de stabilisateur de mousse molle chaude de polyuréthane selon l'une quelconque des revendications précédentes, où l'agent tensioactif anionique est choisi dans le groupe comprenant les alkylsulfates, les sulfates d'alcools gras, les alkylsulfates secondaires, les paraffine-sulfonates, les alkyléthersulfates, les alkylpolyglycoléthersulfates, les arylsulfonates, les éthersulfates d'alcools gras, les alkylbenzènesulfonates, les alkylphénoléthersulfates, les alkylphosphates, les monoesters, diesters et triesters de l'acide phosphorique, les alkylétherphosphates, les esters de l'acide phosphorique d'alcools gras éthoxylés, les esters de l'acide phosphonique, les diesters de l'acide sulfosuccinique, les monoesters de l'acide sulfosuccinique, les monoesters de l'acide sulfosuccinique éthoxylé, les sulfosuccinamides, les α-oléfinesulfonates, les alkylcarboxylates, les alkyléthercarboxylates, les alkylpolyglycolcarboxylates, les iséthionates d'acides gras, le tauride méthylique d'acides gras, le sarcoside d'acides gras, les arylsulfonates, les naphtalènesulfonates, les alkylglycéryléthersulfonates, les polyacrylates et/ou les esters d'acides gras α-sulfo.

17. Solution de stabilisateur de mousse molle chaude de polyuréthane selon l'une quelconque des revendications précédentes, où l'agent tensioactif cationique est choisi dans le groupe comprenant les esters quaternaires, de préférence le méthosulfate de di-((amide d'acide gras de suif)éthyl)méthylpolyéthoxyammonium, les diamidoamines quaternaires, les alkyloxyalkylquats, de préférence le méthosulfate de coco-pentaéthoxyméthylammonium et/ou les trialkylquats, de préférence le chlorure de cétyltriméthylammonium.

18. Solution de stabilisateur de mousse molle chaude de polyuréthane selon l'une quelconque des revendications précédentes, où l'agent tensioactif non ionique est choisi dans le groupe comprenant les éthoxylates d'alcools, les polyglycoléthers d'alcools gras, les éthoxylates d'acides gras, les polyglycolesters d'acides gras, les monoalcoxylates de glycérol, les alcanolamides, les alkylolamides d'acides gras, les alcanolamides éthoxylés, les alkylolamidoéthoxylates d'acides gras, les imidazolines, les copolymères à blocs d'oxyde d'éthylène-oxyde de propylène, les éthoxylates d'alkylphénols, les alkylglucosides, les esters de sorbitane éthoxylés et/ou les alcoxylates d'amine.

19. Solution de stabilisateur de mousse molle chaude de polyuréthane selon l'une quelconque des revendications précédentes, où l'agent tensioactif amphotère est choisi dans le groupe comprenant les amphoacétates, les amphodiacétates, les glycinates, les amphopropionates, les sultaïnes, les oxydes d'amine et/ou les bétaïnes.

20. Solution de stabilisateur de mousse molle chaude de polyuréthane selon l'une quelconque des revendications précédentes, où la solution de stabilisateur de mousse molle chaude de polyuréthane contient comme additif supplémentaire au moins un composé de type sel du groupe comprenant les sels inorganiques et organiques en une proportion de ≥ 0 à ≤ 5% en poids. Les cations proviennent de préférence du groupe des sels de métal alcalin et alcalino-terreux, en particulier les sels de lithium, de sodium, de potassium, d'ammonium et d'ammonium substitué, tels que les sels de monoéthanolammonium, de diéthanolammonium et de triéthanolammonium. Les anions proviennent en particulier du groupe des sulfates, des halogénures et des carboxylates, de manière particulièrement préférée du groupe des benzoates et des lactates.

21. Solution de stabilisateur de mousse molle chaude de polyuréthane selon l'une quelconque des revendications précédentes, où la solution de stabilisateur de mousse molle chaude de polyuréthane contient comme additif supplémentaire au moins un composé à fonctionnalité polyhydroxy, qui présente une fonctionnalité ≥ 3, où le composé à fonctionnalité polyhydroxy est de préférence choisi dans le groupe comprenant le glycérol, le triméthylolpropane, le pentaérythritol, les hydrates de carbone de haut et/ou de bas poids moléculaire. La proportion d'additifs à fonctionnalité polyhydroxy est de préférence ≥ 0 à ≤ 10% en poids par rapport à la solution de stabilisateur de mousse molle chaude de polyuréthane.

22. Solution de stabilisateur de mousse molle chaude de polyuréthane selon l'une quelconque des revendications précédentes, où la solution présente au moins un additif, choisi dans le groupe comprenant les catalyseurs, les agents gonflants, les biocides, les antioxydants, les substances tampon et/ou les agents ignifuges.

23. Mélange de stabilisateurs de mousse molle chaude de polyuréthane contenant une amine, un polyol et/ou de l'eau, où le mélange de stabilisateurs de mousse molle chaude de polyuréthane contient au moins 40% en poids de solution de stabilisateur de mousse molle chaude de polyuréthane par rapport au poids total du mélange de stabilisateurs de mousse molle chaude de polyuréthane selon l'une quelconque des revendications précédentes 1 à 22.

24. Utilisation de la solution de stabilisateur de mousse molle chaude de polyuréthane selon l'une quelconque des revendications 1 à 22 et/ou du mélange de stabilisateurs de mousse molle chaude de polyuréthane selon la revendication 23 lors de la production de mousses molles chaudes de polyuréthane.

25. Mousse molle chaude de polyuréthane pouvant être obtenue à partir de la réaction de polyols avec des isocyanates en utilisant une solution de stabilisateur de mousse molle chaude de polyuréthane selon l'une quelconque des revendications 1 à 22 et/ou un mélange de stabilisateurs de mousse molle chaude de polyuréthane selon la revendication 23.

26. Mousse molle chaude de polyuréthane selon la revendication 25, où la mousse molle chaude de polyuréthane présente une répartition des tailles des pores dans la plage de 3 cellules/cm à 25 cellules/cm.

27. Produit contenant une mousse molle chaude de polyuréthane selon la revendication 25 ou 26.
